# FASCICULE DE BREVET EUROPEEN

(11) **EP 3 560 173 B1**
(45) Date de publication et mention de la délivrance du brevet: **07.10.2020**
(21) Numéro de dépôt: 17821564.6
(22) Date de dépôt: 18.12.2017
(51) Int. Cl.: H04L 29/08, H04L 12/715, H04L 12/717

(54) **PROCÉDÉ DE PRÉPARATION D'UN RÉSEAU DE COMMUNICATION DISTRIBUÉ À L'ACHEMINEMENT D'UN FLUX DE DONNÉES À TRAVERS LEDIT RÉSEAU**
VERFAHREN ZUR HERSTELLUNG EINES VERTEILTEN KOMMUNIKATIONSNETZWERKS ZUR WEITERLEITUNG EINES DATENSTROMS ÜBER DAS BESAGTE NETZWERK
METHOD OF PREPARING A DISTRIBUTED COMMUNICATION NETWORK FOR THE FORWARDING OF A DATA STREAM ACROSS SAID NETWORK

(30) Priorité: 22.12.2016 FR 1601840
(43) Date de publication de la demande: 30.10.2019
(73) Titulaire: Thales, 92400 Courbevoie (FR)
(72) Inventeur: CHEVALLIER, Michel, 92622 Gennevilliers Cedex (FR); DELATTRE, Michel, 92622 Gennevilliers Cedex (FR); ALCOUFFE, Fabien, 92622 Gennevilliers Cedex (FR)
(74) Mandataire: Lavoix
(86) Numéro de dépôt international: PCT/EP2017/083292
(87) Numéro de publication internationale: WO 2018/114788

(56) Documents cités:
- DHRUV DHODY ET AL: "Cross Stratum Optimization (CSO) Enabled PCE Architecture", PARALLEL AND DISTRIBUTED PROCESSING WITH APPLICATIONS (ISPA), 2012 IEEE 10TH INTERNATIONAL SYMPOSIUM ON, IEEE, 10 juillet 2012 (2012-07-10), pages 500-505, XP032224072, DOI: 10.1109/ISPA.2012.73 ISBN: 978-1-4673-1631-6
- JP VASSEUR ET AL: "A Backward-Recursive PCE-Based Computation (BRPC) Procedure to Compute Shortest Constrained Inter-Domain Traffic Engineering Label Switched Paths; rfc5441.txt", A BACKWARD-RECURSIVE PCE-BASED COMPUTATION (BRPC) PROCEDURE TO COMPUTE SHORTEST CONSTRAINED INTER-DOMAIN TRAFFIC ENGINEERING LABEL SWITCHED PATHS; RFC5441.TXT, INTERNET ENGINEERING TASK FORCE, IETF; STANDARD, INTERNET SOCIETY (ISOC) 4, RUE DES FALAIS, 1 avril 2009 (2009-04-01), XP015065553,

## Description

La présente invention concerne un procédé de préparation d'un réseau de communication distribué à l'acheminement d'un flux de données à travers ledit réseau de communication distribué.

Précédemment, les réseaux étaient subdivisés par type de service. Il y avait par exemple un réseau pour les données, un réseau pour la voix et un réseau pour la visioconférence. Ces réseaux étaient eux-mêmes subdivisés par fournisseur de service. Il n'y avait aucune mutualisation. Les documents D1: DHRUV DHODY ET AL: "Cross Stratum Optimization (CSO) Enabled PCE Architecture", PARALLEL AND DISTRIBUTED PROCESSING WITH APPLICATIONS (ISPA), 2012 IEEE 10TH INTERNATIONAL SYMPOSIUM ON, IEEE, 10 juillet 2012 (2012-07-10), pages 500-505, XP032224072, DOI: 10.1109/ ISPA.2012.73 ISBN: 978-1-4673-1631-6 et D2: JP VASSEUR ET AL: "A Backward-Recursive PCE-Based Computation (BRPC) Procédure to Compute Shortest Constrained Inter-Domain Traffic Engineering Label Switched Paths; rfc5441.txt", décrivent un procédé d'optimisation de réseaux.

Généralement, ces différents réseaux étaient optimisés verticalement. Par exemple, un réseau voix était optimisé pour acheminer le plus d'appels possible et apporter des fonctionnalités additionnelles, comme le double appel, la préemption d'appels... Pour communiquer d'un réseau à l'autre, il fallait mettre en place une passerelle pour relier ces deux silos. Généralement, il y avait une perte en termes de richesse fonctionnelle, dû au fait que chacun des réseaux n'implémentait pas ou différemment ces fonctionnalités.

Chaque réseau était par ailleurs subdivisés en plans : un plan de données où circulaient les données utilisateurs et un plan de signalisation où circulaient tous les messages permettant de réaliser le service en lui-même et d'apporter des services à valeur ajoutée comme le double appel ou la préemption d'appel.

Cette architecture a évolué du fait de l'avènement du protocole internet comme standard de protocole réseau pour tout type de service. Désormais, tous ces services utilisent le même standard réseau, à savoir un réseau régi par le protocole internet, ou « réseau IP ». Le réseau IP s'appuie sur une couche de niveau 3 selon modèle ISO (interconnexion des systèmes ouverts, mieux connu sous l'acronyme anglais OSI pour « Open System Interconnection »). Les réseaux précédemment disjoints deviennent donc mutualisés sous un même protocole réseau pour tous les services. Il devient ainsi difficile de réaliser de l'optimisation verticale. Le plan de signalisation est lui aussi mutualisé avec le plan de données, voire confondu. Le réseau IP est lui-même supporté par des technologies de niveaux inférieurs, câblées ou sans-fil.

Pour répondre au besoin de subdivision, il est apparu un nouveau modèle d'architecture réseau : le réseau à définition logicielle (mieux connu sous l'acronyme SDN pour « Software-Defined Networking »), ce modèle permettant de réaliser des couches (« slices » en anglais) formant des réseaux virtuels par organisation ou par service. Il devient ainsi possible de mutualiser un réseau physique constitué de nœuds physiques et de liens physiques entre de multiples instances facilement reconfigurables de réseau logique organisées en réseaux superposés, et/ou en réseaux virtuels indépendants. Les nœuds du réseau superposé sont interconnectés par des liens logiques du réseau sous-jacent. La complexité du réseau sous-jacent n'est pas visible par le réseau superposé. Un réseau IP utilisant des circuits virtuels à mode de transfert asynchrone (mieux connu sous l'acronyme anglais ATM pour « Asynchronous Transfer Mode »), eux-mêmes créés sur des liens à hiérarchie numérique synchrone (mieux connue sous l'acronyme anglais SDH pour « Synchronous Digital Hierarchy »), eux-mêmes sur de la fibre noire, donne un exemple de réseau superposé. Un réseau virtuel indépendant permet quant à lui de créer un ensemble logique isolé pour améliorer la sécurité ou la gestion de réseau. Le seul moyen pour communiquer entre des nœuds logiques appartenant à des réseaux virtuels indépendants est alors de passer par une fonction d'interconnexion qui contrôlera le passage d'un réseau à l'autre. Dans les deux cas, une architecture de réseau à définition logicielle permet de reconfigurer facilement la connectivité sans modifier le réseau physique. Il se pose alors un problème de concurrence de flux utilisant des ressources partagées.

Si on s'intéresse plus particulièrement aux réseaux sans fil, qui servent donc, comme on l'a vu plus haut, de support au réseau IP, on constate que ces réseaux sont soumis à des contraintes qui peuvent compliquer le transfert d'informations au sein de ces réseaux. En effet, les réseaux sans fils comprennent deux éléments principaux : une infrastructure de télécommunication, qui apporte le service de connectivité sans fil, et des usagers, qui utilisent ce service de connectivité sans fil. Ces usagers et cette infrastructure sont reliés les uns aux autres via des liens virtuels constitués par les chemins pris par les ondes entre les usagers et l'infrastructure. Or, ces liens sont susceptibles d'être altérés ou reconfigurés selon les déplacements des usagers et/ou de l'infrastructure : en l'absence de connexion physique avec un câble, les usagers et l'infrastructure peuvent en effet se déplacer les uns par rapport aux autres, et, la distance de l'usager à l'antenne de l'infrastructure à laquelle il est connecté augmentant, le lien peut se dégrader, jusqu'à ce qu'il soit rompu ou qu'un nouveau lien entre l'usager et une autre antenne de l'infrastructure soit établi. On conçoit que, dans ces conditions, il est difficile de maintenir un niveau de service constant pour l'usager pendant toute la durée pendant laquelle l'usager utilisera le service de connectivité sans fil apporté par l'infrastructure.

Pour permettre le transfert des flux au sein de l'infrastructure en tenant compte de la mobilité des usagers et de l'infrastructure, il est nécessaire de planifier les échanges et l'organisation entre ces deux entités. Pour cela, deux différents types de réseaux sans fils sont envisagés : les réseaux planifiés tout d'abord, qui sont planifiés en amont et conservent une configuration fixe, quelle que soit la position des usagers par rapport à l'infrastructure, les réseaux cognitifs ensuite, qui sont des réseaux peu planifiés et qui, découvrant leur environnement, s'adaptent d'un point de vue radio de manière à s'y insérer harmonieusement. Les réseaux planifiés présentent l'inconvénient d'entraîner une dégradation du niveau de service de la communication lorsque le lien raccordant l'usager à l'antenne à laquelle il est connecté se détériore suite à des évènements non planifiés, le réseau ne pouvant pas, dans un tel cas, construire de nouveau lien plus performant entre l'usager et l'infrastructure. Les réseaux cognitifs présentent quant à eux l'inconvénient de ne pas traiter des réseaux hybrides constitués d'interconnexion de multiples réseaux de technologies différentes. En outre, si les réseaux cognitifs écoutent et s'adaptent à leur environnement, permettant d'ajuster leurs paramètres de fonctionnement de façon dynamique et autonome et apprenant des résultats de leurs actions et de leur cadre environnemental d'exploitation, ils ne fournissent pas de mécanismes permettant d'acheminer avec une garantie de service.

Une difficulté supplémentaire au maintien d'un niveau de service constant vu par l'usager réside dans la multiplicité des acteurs intervenant depuis la production de ce service, en passant par son acheminement jusqu'à sa consommation par l'usager. On distingue ainsi :
- des producteurs de service produisant des services destinés à des usagers et possédant les infrastructures informatiques nécessaires à cette fin ; des exemples de tels producteurs de services sont Facebook et Google ;
- des opérateurs de transport, en charge de l'acheminement du service depuis les producteurs de services jusqu'aux réseaux de desserte où sont raccordés les usagers ; des exemples de tels opérateurs de transport sont AKAMAI, British Telecom, Orange ; et
- des opérateurs de radio, responsables des réseaux de desserte radios sur lesquels les usagers se connectent ; des exemples de tels opérateurs de radio sont les opérateurs GSM/LTE tels que Orange, Vodafone ou Verizon, mais aussi les opérateurs satellites, tels qu'Iridium ou INMARSAT.

Chaque opérateur possède son propre domaine à l'intérieur duquel il gère les acheminements des flux de données selon des règles propres et généralement ignorées des autres opérateurs. Avec autant d'opérateurs, il est évident qu'il est difficile de maintenir une qualité de service constante de bout en bout sans une répartition claire des responsabilités entre ces opérateurs.

Encore une autre difficulté au maintien d'un niveau de service constant vu par l'usager réside dans la caractérisation du besoin. En effet, les critères sur lesquels l'usager va se baser pour évaluer la qualité de service du service qu'il reçoit vont être grandement différents des paramètres ajustables par les opérateurs pour atteindre cette qualité de service, lesdits paramètres variant de plus d'un opérateur à l'autre, et étant par ailleurs traduits en paramètres techniques de manière récursive entre les différents équipements participant à l'acheminement du service. Ainsi, alors qu'un usager pourra caractériser son besoin par une date et une heure de début, une durée et des caractéristiques applicatives, les opérateurs traduiront ce besoin en termes de latence, de débit ou de gigue, cette traduction s'éloignant de plus en plus du besoin exprimé par l'usager à mesure que l'opérateur interviendra dans une couche profonde du modèle ISO.

Enfin, une dernière difficulté réside dans l'élasticité des flux, laquelle pose des problèmes de réservation de ressources. En effet, la réservation ne peut apporter une garantie de qualité de service que si le flux qui en bénéficie n'excède pas le débit qui lui a été alloué. Deux stratégies sont alors possibles dans ces conditions :
- une première solution consiste à réserver une large bande passante pour chaque flux afin de lui garantir la haute qualité de service inhérente à un fort débit ; toutefois, dans un tel cas, les ressources monopolisées par les flux déjà établis ne pourront pas être réaffectées à des flux nouveaux, et le nombre de sessions admissibles dans le réseau sera drastiquement limité alors même que l'élasticité des flux (par exemple ceux qui emploient le protocole TCP) leur permettrait de partager équitablement les ressources disponibles et d'offrir en moyenne une qualité de service acceptable ;
- une deuxième solution consiste à réserver une bande passante considérée comme minimale pour chaque flux, ce qui lui garantit effectivement un taux de pertes nul ou très faible, mais a l'inconvénient de limiter artificiellement son débit, même si, au moment où ce flux est actif, le réseau serait en mesure de lui allouer une quantité bien plus élevée de ressources.

Par ailleurs, aujourd'hui, seuls les flux ayant une signalisation explicite peuvent être traités. Ainsi, les flux sans signalisation ne peuvent pas être pris en compte. Il se pose donc également le problème de l'identification d'un événement qui va permettre au réseau de décider de créer un chemin pour un flux dépourvu de signalisation explicite.

Dans le cadre des réseaux tactiques, il existe une difficulté supplémentaire liée à la variabilité du graphe de connexité et de la capacité de ces réseaux.

Des éléments de l'infrastructure ou des usagers peuvent en effet apparaitre comme disparaître au fil de la manœuvre militaire et de son tempo. Sans prise en compte de cette variabilité, il devient rapidement plus possible de fournir les services nécessaires. De plus, la capacité du réseau est fortement impactée par la variabilité de capacité des réseaux sans fil comme le SATCOM ou le LTE, qui sont par essence des réseaux à débits variables, cette variabilité étant généralement liée aux conditions météorologiques. Le plan de signalisation doit prendre en compte cette particularité et la traiter avec des mécanismes adéquats pour garantir la fourniture des services.

Pour finir, un autre problème qui se pose avec les réseaux de communication consiste à réduire leur empreinte énergétique et, de ce fait, le coût de fonctionnement de ces réseaux. D'ores et déjà, la recherche de faible consommation énergétique, de système rapidement déployable, de discrétion, de survivabilité conduisent à réduire au maximum le gaspillage des ressources et à tirer parti de faibles capacités. Les réseaux desservent des applications et des usagers dont les échanges restent faibles au regard des échanges de masse de l'internet. Les marges d'adaptation sont donc largement amoindries et il faut dans ce contexte se préoccuper de micro-flux et non de macro-flux bénéficiant d'effets statistiques ainsi de mécanismes d'adaptation à l'échelle des temps de transmission. La transformation des ressources disponibles en échanges maintenant une qualité de service satisfaisante doit donc être la plus efficace possible.

Pour résumer, alors que les architectures antérieures apportaient une simplicité, à la portée de l'humain, lorsque les services et moyens étaient homogènes, elles sont devenues caduques avec la variabilité des services à rendre et l'hétérogénéité des moyens de transport utilisés. De plus, les réseaux ont des capacités très variables dans le temps qu'il est nécessaire d'adresser au mieux pour permettre l'acheminement d'un maximum de flux avec la meilleure qualité de service possible tout en étant le plus efficace possible d'un point de vue énergétique.

Ainsi, un objectif de l'invention consiste à permettre la préparation d'un réseau de communication multi domaine, multi opérateur et multi allocateur de ressources radio à l'acheminement d'un flux de données à travers ledit réseau de manière à fournir la qualité de service demandée tout en optimisant l'utilisation des ressources de ce réseau.

A cet effet, l'invention a pour objet un procédé du type précité, comprenant les étapes suivantes :
- fourniture du réseau de communication distribué, le réseau de communication distribué utilisant un graphe de réseau de communication formé par une pluralité d'unités fonctionnelles interconnectées par des liens de communication permanents ou intermittents, chaque unité fonctionnelle utilisant des ressources pour assurer l'acheminement d'un flux de données depuis ladite unité fonctionnelle vers une autre unité fonctionnelle à laquelle elle est connectée via un lien,
   ∘ lesdites unités fonctionnelles étant réparties en au moins deux couches telles que les unités fonctionnelles de chaque couche communiquent entre elles en gérant des ressources de communication de même nature et les unités fonctionnelles de couches différentes gèrent des ressources de communication de natures différentes,
   ∘ au moins deux desdites couches comprenant chacune au moins un domaine regroupant une pluralité d'unités fonctionnelles de la couche, le ou chaque domaine comprenant un gestionnaire de domaine collectant des informations de contrôle des unités fonctionnelles du domaine et allouant ou fixant des règles d'utilisation de ressources aux unités fonctionnelles du domaine,
   ∘ les liens de communication comprenant des liens horizontaux connectant entre elles des unités fonctionnelles appartenant à une même couche et des liens verticaux connectant entre elles des unités fonctionnelles appartenant à des couches différentes,
   ∘ les couches comprenant une couche principale et au moins une couche inférieure telles que les ressources gérées par les unités fonctionnelles inférieures de la ou chaque couche inférieure servent de support aux ressources gérées par les unités fonctionnelles principales de la couche principale, et
   ∘ les domaines comprenant un domaine principal appartenant à la couche principale, et au moins un premier domaine support appartenant à une couche inférieure et comprenant au moins une unité fonctionnelle raccordée via un lien vertical à une unité fonctionnelle principale du domaine principal,
- détermination, par le gestionnaire de domaine de chaque domaine, à partir de la collecte d'informations de contrôle et de l'allocation de ressources réalisées par le gestionnaire de domaine, d'une cartographie capacitaire du domaine, ladite cartographie comprenant, pour au moins un couple formé par un point d'entrée dans le domaine et un point cible, une mesure des capacités courante et future du domaine à acheminer un flux de données entre le point d'entrée et le point cible, le point d'entrée étant constitué par une unité fonctionnelle du domaine et le point cible par une unité fonctionnelle appartenant à la même couche que le domaine,
- découverte, par le gestionnaire de domaine du domaine principal, du ou de chaque premier domaine support,
- partage, par le gestionnaire de domaine du ou de chaque premier domaine support, de la cartographie capacitaire dudit premier domaine support avec le gestionnaire de domaine du domaine principal, et
- actualisation, par le gestionnaire de domaine du domaine principal, de la cartographie capacitaire dudit domaine principal en fonction de la ou chaque cartographie capacitaire de domaine support partagée avec le gestionnaire de domaine du domaine principal.

Selon des modes de réalisation particuliers de l'invention, le procédé présente également une ou plusieurs des caractéristiques suivantes, prise(s) isolément ou suivant toute(s) combinaison(s) techniquement possible(s) :
- les couches comprennent une couche supérieure telle que les ressources gérées par les unités fonctionnelles principales de la couche principale servent de support aux ressources gérées par les unités fonctionnelles supérieures de la couche supérieure, et les domaines comprennent au moins un domaine supérieur appartenant à la couche supérieure et comprenant au moins une unité fonctionnelle raccordée via un lien vertical à une unité fonctionnelle principale du domaine principal, le procédé de préparation comprenant une étape de partage, par le gestionnaire de domaine du domaine principal, de la cartographie capacitaire actualisée dudit domaine principal avec le gestionnaire de domaine du domaine supérieur la pluralité d'unités fonctionnelles comporte une unité fonctionnelle de forme d'onde.
- l'unité fonctionnelle de forme d'onde est propre à gérer au moins une ressource parmi : créneaux de trame TDMA, codes CDMA, règles FDMA, modulations FSK, PSK, ASK, et codages d'information binaire en symbole de modulation les domaines comprennent au moins un domaine voisin comprenant au moins une unité fonctionnelle raccordée via un lien horizontal à une unité fonctionnelle principale du domaine principal, et le procédé de préparation comprend une étape de partage, par le gestionnaire de domaine du domaine principal, de la cartographie capacitaire actualisée dudit domaine principal avec le gestionnaire de domaine du ou de chaque domaine voisin.
- la pluralité d'unités fonctionnelles comporte une unité fonctionnelle de couverture propre à gérer au moins une partie des ressources suivantes : paramètres de pointage d'antenne, fréquences radio et puissances d'émission.
- la pluralité d'unités fonctionnelles comporte une unité fonctionnelle de couverture comportant des équipements radiofréquence.
- les équipements radiofréquence sont choisis parmi un amplificateur à faible bruit, un circulateur, une matrice de commutations radiofréquences et des unités de contrôle d'antenne.
- le réseau de communication distribué comporte une pluralité d'équipements de communication, chaque équipement de communication comprenant au moins une unité fonctionnelle. les équipements de communication comportant au moins l'un parmi les éléments suivants : des serveurs d'accès formant des points d'entrée et de sortie sur le réseau de communication distribué, dont des serveurs câblés et des serveurs sans fils, des routeurs câblés, des routeurs satellite, des satellites et des routeurs sans fil.
- les unités fonctionnelles comporte des unités fonctionnelles applicatives appartenant toutes à une couche applicative, des unités fonctionnelles de routage appartenant toutes à une couche de routage, des unités fonctionnelles de forme d'onde appartenant toutes à une couche de forme d'onde et des unités fonctionnelles de couverture appartenant toutes à une couche de couverture.
- le réseau de communication distribué comporte une infrastructure fixe et une infrastructure mobile.
- les couches comportent au moins une couche de routage comprenant deux domaines de routage compatibles un premier domaine de routage correspondant à l'infrastructure fixe et un deuxième domaine de routage correspondant à l'infrastructure mobile.
- le premier domaine de routage comprend deux unités fonctionnelles de routage appartenant à l'infrastructure fixe.
- le deuxième domaine de routage comprend une unité fonctionnelle de routage appartenant à l'infrastructure mobile.
- les couches comportent au moins une couche de forme d'onde, la couche de forme d'ondes comportant trois domaines de forme d'onde.
- le réseau de communication distribué comporte une infrastructure satellite et une infrastructure sans fil, les premier et deuxième domaines de forme d'onde correspondant à l'infrastructure satellite, et le troisième domaine de forme d'onde correspondant à l'infrastructure sans fil.
- les couches comprennent une couche supérieure telle que les ressources gérées par les unités fonctionnelles principales de la couche principale servent de support aux ressources gérées par les unités fonctionnelles supérieures de la couche supérieure, et les domaines comprennent au moins un domaine supérieur appartenant à la couche supérieure et comprenant au moins une unité fonctionnelle raccordée via un lien vertical à une unité fonctionnelle principale du domaine principal, le procédé de préparation comprenant une étape de partage, par le gestionnaire de domaine du domaine principal, de la cartographie capacitaire actualisée dudit domaine principal avec le gestionnaire de domaine du domaine supérieur ;
- les domaines comprennent au moins un domaine voisin comprenant au moins une unité fonctionnelle raccordée via un lien horizontal à une unité fonctionnelle principale du domaine principal, et le procédé de préparation comprend une étape de partage, par le gestionnaire de domaine du domaine principal, de la cartographie capacitaire actualisée dudit domaine principal avec le gestionnaire de domaine du ou de chaque domaine voisin ;
- le procédé de préparation comprend les étapes supplémentaires suivantes :
   ∘ émission, par une entité émettrice, d'une première requête de service d'acheminement pour l'acheminement d'un flux de données depuis une unité fonctionnelle d'entrée appartenant à la couche principale du réseau de communication jusqu'à une unité fonctionnelle de sortie appartenant à ladite couche principale, ladite première requête de service d'acheminement fixant des premiers objectifs de niveau de services, exprimés dans un langage prédéterminé, pour l'acheminement du flux de données,
   ∘ calcul d'une route principale reliant l'unité fonctionnelle d'entrée à l'unité fonctionnelle de sortie et respectant les objectifs de niveau de service fixés, ladite route principale étant formée par un lien horizontal ou une suite de liens horizontaux reliant entre elles des unités fonctionnelles de transit appartenant à au moins un domaine traversé parmi le ou les domaines de la couche principale, ledit calcul comprenant, pour le ou chaque domaine traversé, les sous-étapes suivantes :
      ▪ information du gestionnaire de domaine du domaine traversé qu'une unité fonctionnelle du domaine traversé a été sélectionnée comme point entrant de la route principale dans ledit domaine traversé,
      ▪ réception par le gestionnaire de domaine du domaine traversé d'une requête de service d'acheminement basée sur la première requête de service d'acheminement,
      ▪ identification, par le gestionnaire de domaine du domaine traversé, d'un point de destination par lequel faire transiter la route principale à sa sortie du domaine traversé, ledit point de destination étant constitué par une unité fonctionnelle connectée par un lien horizontal à une unité fonctionnelle du domaine traversé,
      ▪ détermination, par le gestionnaire de domaine du domaine traversé, d'une promesse de niveau de service respectant les premiers objectifs de niveau de service pour l'acheminement du flux de données depuis le point entrant jusqu'au point de destination, et
      ▪ calcul, par le gestionnaire de domaine du domaine traversé, au moyen de la cartographie capacitaire du domaine traversé, d'un tronçon de route principale reliant le point entrant au point de destination, ledit tronçon étant adapté pour assurer l'acheminement du flux de données de manière conforme à la promesse de niveau de service et étant formé par un lien horizontal ou une suite de liens horizontaux partant d'unités fonctionnelles du domaine traversé,
   ∘ allocation, à chaque unité fonctionnelle de transit, par le gestionnaire de domaine du domaine traversé correspondant, de ressources suffisantes pour assurer l'acheminement d'un flux de données le long de la route principale en respectant les premiers objectifs de niveau de service,
   ∘ engagement, par chaque unité fonctionnelle de transit, des ressources allouées à l'unité fonctionnelle, et
   ∘ information de l'entité émettrice de l'engagement desdites ressources ;
- les domaines traversés sont au moins au nombre de deux, l'étape de calcul de la route principale comprenant les sous-étapes supplémentaires suivantes :
   ∘ détermination, par le gestionnaire de domaine d'un premier domaine traversé constitué par le domaine principal, en fonction de la cartographie capacitaire du ou de chaque domaine voisin, d'un deuxième domaine traversé, appartenant à la couche principale, par lequel faire transiter la route principale,
   ∘ sélection, par le gestionnaire de domaine du premier domaine traversé, du point entrant de la route principale dans le deuxième domaine traversé, ledit point entrant constituant pour le premier domaine traversé le point de destination de la route principale,
   ∘ communication, par le gestionnaire de domaine du premier domaine traversé, d'une information destinée au gestionnaire de domaine du deuxième domaine traversé portant sur le point entrant sélectionné, et
   ∘ transmission au gestionnaire de domaine du deuxième domaine traversé, par le gestionnaire de domaine du premier domaine traversé, d'une deuxième requête de service d'acheminement basée sur la première requête de service d'acheminement, ladite deuxième requête de service d'acheminement comprenant des deuxièmes objectifs de niveau de service exprimés dans le langage prédéterminé ;
- les deuxièmes objectifs de niveau de service sont calculés de sorte que la combinaison de ces deuxièmes objectifs de niveau de service avec la promesse de niveau de service du premier domaine traversé respecte les premiers objectifs de niveau de service ;
- un domaine traversé est constitué par le domaine principal, et les unités fonctionnelles de transit comprennent une première unité fonctionnelle de transit appartenant au domaine principal et une deuxième unité fonctionnelle de transit connectée à la première unité fonctionnelle de transit via un lien horizontal, le procédé comprenant une étape supplémentaire de construction d'une route de support entre les première et deuxième unités fonctionnelles de transit, ladite étape de construction comprenant les sous-étapes suivantes :
   ∘ transmission au gestionnaire de domaine du premier domaine support, par le gestionnaire de domaine du domaine principal, d'une requête de service support pour l'acheminement d'un flux de données depuis la première unité fonctionnelle de transit jusqu'à la deuxième unité fonctionnelle de transit, ladite requête de service support comprenant des premiers objectifs de niveau de service support, respectant les premiers objectifs de niveau de service et exprimés dans le langage prédéterminé,
   ∘ calcul, en fonction de la cartographie capacitaire dudit premier domaine support, de la route de support de sorte à ce qu'elle respecte les premiers objectifs de niveau de service support, la route de support étant constituée d'un lien horizontal ou d'une suite de liens horizontaux reliant entre elles des unités fonctionnelles de support appartenant à la même couche que le premier domaine support, une première desdites unités fonctionnelles de support appartenant au premier domaine support et étant connectée via un lien vertical à la première unité fonctionnelle de transit et une deuxième desdites unités fonctionnelles de support étant connectée via un lien vertical à la deuxième unité fonctionnelle de transit,
   ∘ allocation, à chaque unité fonctionnelle de support, par le gestionnaire de domaine du domaine auquel elle appartient, de ressources suffisantes pour assurer l'acheminement d'un flux de données le long de la route de support en respectant les premiers objectifs de niveau de service support,
   ∘ engagement, par chaque unité fonctionnelle de support, des ressources allouées à ladite unité fonctionnelle de support, et
   ∘ information du gestionnaire de domaine du domaine principal de l'engagement desdites ressources ;
- la couche du premier domaine support comprend au moins un domaine distinct du premier domaine support, dont au moins un domaine adjacent au premier domaine support comprenant au moins une unité fonctionnelle raccordée par un lien horizontal à une unité fonctionnelle du premier domaine support, la deuxième unité fonctionnelle de support appartenant à un domaine distinct du premier domaine support, et l'étape de calcul de la route de support comprend les sous-étapes suivantes :
   ∘ détermination, par le gestionnaire de domaine du premier domaine support, en fonction de la cartographie capacitaire du ou de chaque domaine adjacent, d'un deuxième domaine support, choisi parmi le ou les domaine(s) adjacent(s), par lequel faire transiter la route de support,
   ∘ sélection, par le gestionnaire de domaine du premier domaine support, d'un point d'entrée de la route de support dans le deuxième domaine support,
   ∘ détermination, par le gestionnaire de domaine du premier domaine support, d'une promesse de niveau de service support respectant les objectifs de niveau de service support pour l'acheminement du flux de données depuis la première unité fonctionnelle de support jusqu'au point d'entrée,
   ∘ communication, par le gestionnaire de domaine du premier domaine support, d'une information destinée au gestionnaire de domaine du deuxième domaine support portant sur le point d'entrée sélectionné,
   ∘ transmission au gestionnaire de domaine du deuxième domaine support, par le gestionnaire de domaine du premier domaine support, d'une deuxième requête de service support basée sur la première requête de service support, ladite deuxième requête de service support comprenant des deuxièmes objectifs de niveau de service support exprimés dans le langage prédéterminé, et
   ∘ calcul, par le gestionnaire de domaine du premier domaine support, au moyen de la cartographie capacitaire du premier domaine support, d'un tronçon de route de support reliant la première unité fonctionnelle de support au point d'entrée, ledit tronçon étant adapté pour assurer l'acheminement du flux de données de manière conforme à la promesse de niveau de service support et étant formé par un lien horizontal ou une suite de liens horizontaux partant d'unités fonctionnelles du premier domaine support ;
- le procédé de préparation comprend les étapes supplémentaires suivantes :
   ∘ raccordement d'un premier terminal au réseau de communication,
   ∘ collecte, par un orchestrateur de service, de la cartographie capacitaire du ou de chaque domaine de la couche principale ayant au moins une unité fonctionnelle directement atteignable par le premier terminal,
   ∘ émission, par une première application fonctionnant sur le premier terminal, d'un flux de données à destination d'une deuxième application fonctionnant sur un deuxième terminal distant raccordé à l'unité fonctionnelle de sortie,
   ∘ détection de cette émission par l'orchestrateur de service,
   ∘ déclenchement, par l'orchestrateur de service, de la première requête de service d'acheminement à partir du flux de données émis et de logiques de services prédéterminées,
   ∘ désignation, par l'orchestrateur de service, en fonction de la ou chaque cartographie capacitaire collectée, d'un domaine d'entrée de la couche principale constitué par un domaine ayant au moins une unité fonctionnelle directement atteignable par le premier terminal,
   ∘ attribution, par l'orchestrateur de service, en fonction de la ou chaque cartographie capacitaire collectée, à une unité fonctionnelle du domaine d'entrée directement atteignable par le premier terminal, du rôle d'unité fonctionnelle d'entrée, et
   ∘ transmission de la première requête de service d'acheminement au gestionnaire de domaine du domaine d'entrée, l'orchestrateur de service constituant l'entité émettrice ;
- le gestionnaire de domaine de chaque domaine du réseau de communication est programmé pour décoder des objectifs de niveau de services lorsqu'ils sont exprimés dans le langage prédéterminé ;
- le procédé de préparation comprend une étape de surveillance, par chaque gestionnaire de domaine d'un domaine traversé, du respect de l'engagement suivi, et dans le cas où le gestionnaire de domaine détecte que l'engagement ne peut plus être respecté avec l'allocation de ressources courant, d'une étape de ré-allocation de ressources pour maintenir l'engagement ;
- chaque couche est constituée par une ou plusieurs couches propres telles que définies dans le modèle ISO (Interconnexion des systèmes ouverts) ;
- la couche principale comprend une couche de niveau 3 selon le modèle ISO, ou une couche de niveau inférieur ;
- les couches du réseau de communication comprennent une première couche applicative comprenant une couche de niveau 4 selon le modèle ISO, une deuxième couche réseau comprenant une couche de niveau 3 selon le modèle ISO, une troisième couche forme d'onde comprenant une couche de niveau 2 selon le modèle ISO, et une quatrième couche couverture comprenant une couche de niveau 1 selon le modèle ISO ;
- le gestionnaire de domaine de chaque domaine du réseau de communication est un gestionnaire distribué comprenant un ensemble d'automates informatiques coordonnés répartis entre différents équipements de communication intégrant chacun une unité fonctionnelle du domaine ; et
- le procédé de préparation comprend une étape de découverte des gestionnaires de domaine des domaines voisin, supérieur et/ou support par le gestionnaire de domaine du domaine principal grâce à des échanges appliquant le protocole internet entre les unités fonctionnelles desdits domaines et à des règles implicites de découverte appliquées à ces échanges.

D'autres caractéristiques et avantages de l'invention ressortiront à la lecture de la description qui va suivre, donnée uniquement à titre d'exemple et faite en se référant aux dessins annexés, dans lesquels :
- la Figure 1 est un diagramme synoptique illustrant un premier réseau de communication implémentant l'invention,
- la Figure 2 est un diagramme synoptique illustrant un graphe de réseau de communication du réseau de communication de la Figure 1,
- les Figures 3 à 7 sont des diagrammes en blocs illustrant un procédé selon l'invention,
- la Figure 8 est un diagramme synoptique illustrant un deuxième réseau de communication implémentant l'invention, et
- la Figure 9 est un diagramme synoptique illustrant un graphe de réseau de communication du réseau de communication de la Figure 8.

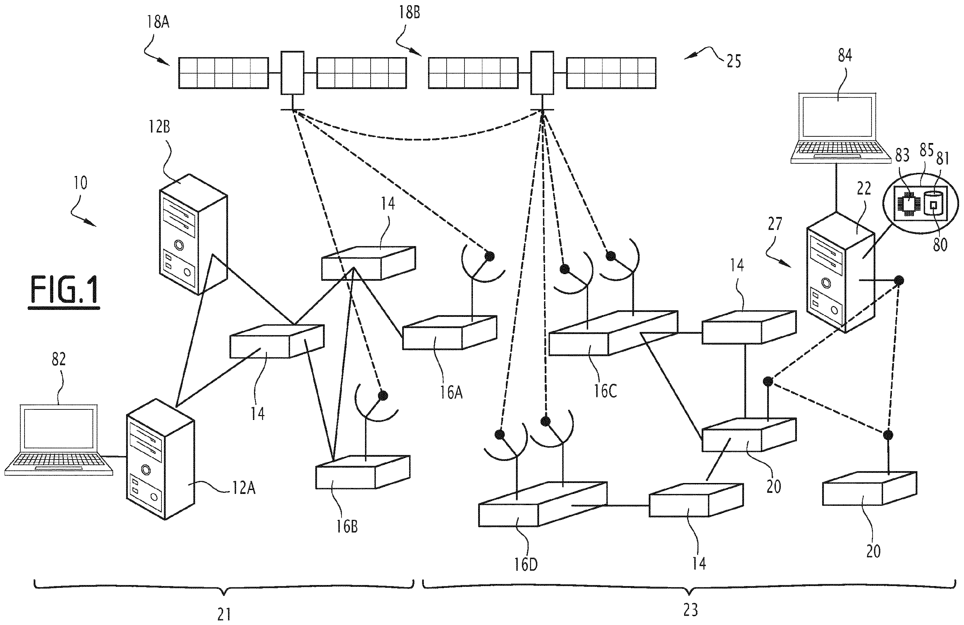

Le réseau de communication 10 de la Figure 1 comprend, de manière connue, une pluralité d'équipements de communication 12A, 12B, 14, 16A, 16B, 16C, 16D, 18A, 18B, 20, 22. Ces équipements de communication 12A, 12B, 14, 16A, 16B, 16C, 16D, 18A, 18B, 20, 22 comprennent notamment des serveurs d'accès 12A, 12B, 22 formant des points d'entrée et de sortie sur le réseau 10, dont des serveurs câblés 12A, 12B et des serveurs sans fils 22, des routeurs câblés 14, des routeurs satellite 16A, 16B, 16C, 16D, des satellites 18A, 18B, et des routeurs sans fil 20.

Ces équipements de communication 12A, 12B, 14, 16A, 16B, 16C, 16D, 18A, 18B, 20, 22 sont répartis entre une infrastructure fixe 21, installée par exemple dans un centre de commandement d'opération (non représenté), une infrastructure mobile 23 déployée par exemple sur un théâtre d'opération (non représenté), une infrastructure satellite 25 mettant en communication l'infrastructure fixe 21 et l'infrastructure mobile 23, et une infrastructure sans fil 27 mettant en communication différents équipements de communication 20, 22 de l'infrastructure mobile 23. Dans l'exemple représenté, l'infrastructure fixe 21 comprend ainsi deux serveurs câblés 12A, 12B, deux routeurs câblés 14 et deux routeurs satellite 16A, 16B, l'infrastructure mobile 23 comprend ainsi un routeur câblé 14, deux routeurs satellite 16C, 16D, deux routeurs sans fil 20 et un serveur sans fil 22, l'infrastructure satellite 25 comprend deux satellites 18A, 18B et les quatre routeurs satellites 16A, 16B, 16C, 16D des deux infrastructures fixe et mobile 21, 23, et l'infrastructure sans fil 27 comprend les deux routeurs sans fil 20 et le serveur sans fil 22 de l'infrastructure mobile 23.

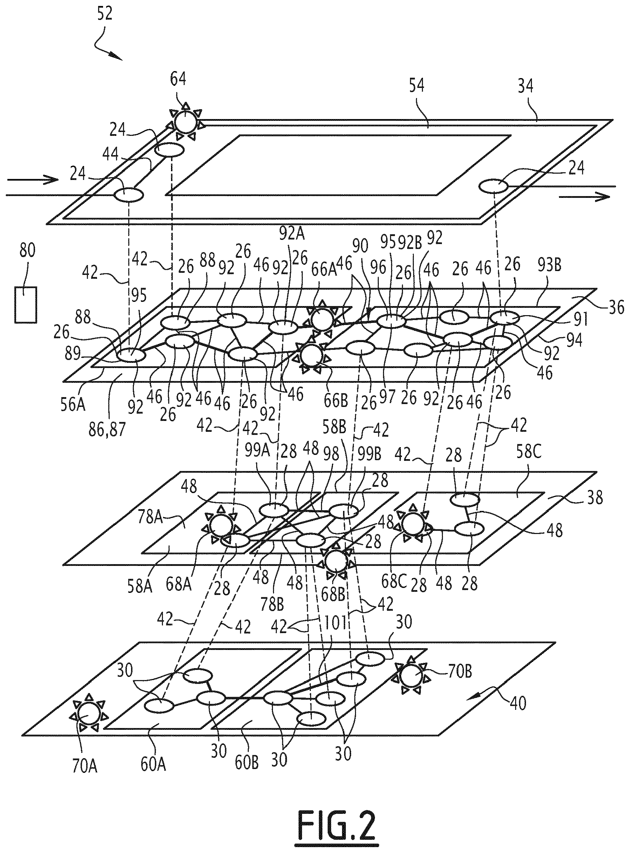

Chaque équipement de communication 12A, 12B, 14, 16A, 16B, 16C, 16D, 18A, 18B, 20, 22 comprend au moins une unité fonctionnelle 24, 26, 28, 30, comme représenté sur la Figure 2. Parmi ces unités fonctionnelles 24, 26, 28, 30, on distingue des unités fonctionnelles applicatives 24, appartenant toutes à une couche applicative 34, des unités fonctionnelles de routage 26, appartenant toutes à une couche de routage 36, des unités fonctionnelles de forme d'onde 28, appartenant toutes à une couche de forme d'onde 38, et des unités fonctionnelles de couverture 30 appartenant toutes à une couche de couverture 40.

Chaque serveur 12A, 12B, 22 comprend typiquement une unité fonctionnelle applicative 24 et une unité fonctionnelle de routage 26. Le serveur sans fil 22 comprend également une unité fonctionnelle de forme d'onde 28.

Chaque routeur câblé 14 comprend typiquement une unité fonctionnelle de routage 26.

Chaque routeur satellite 16A, 16B, 16C, 16D comprend typiquement une unité fonctionnelle de routage 26 et une unité fonctionnelle de forme d'onde 28. Chaque routeur satellite 16A, 16B, 16C, 16D comprend également, de même que les satellites 18A, 18B, au moins une unité fonctionnelle de couverture 30.

Chaque routeur sans fil 20 comprend typiquement une unité fonctionnelle de routage 26 et une unité fonctionnelle de forme d'onde 28.

Les unités fonctionnelles 24, 26, 28, 30 appartenant à un même équipement de communication 12A, 12B, 14, 16A, 16B, 16C, 16D, 18A, 18B, 20, 22 sont connectées les unes aux autres via des liens dits verticaux 42.

Les unités fonctionnelles 24, 26, 28, 30 appartenant à une même couche 34, 36, 38, 40 sont connectées les unes aux autres via des liens dits horizontaux 44, 46, 48, 50. Chaque lien horizontal 44, 46, 48, 50 est soit permanent, c'est-à-dire que les unités fonctionnelles 24, 26, 28, 30 qu'il relie sont en permanence connectées l'une à l'autre par ce lien 44, 46, 48, 50 lorsque le réseau 10 est allumé, soit intermittent, c'est-à-dire que le lien 44, 46, 48, 50 peut par moment être rompu, les unités fonctionnelles 24, 26, 28, 30 qu'il relie n'étant alors plus connectées l'une à l'autre par ce lien 44, 46, 48, 50. Par ailleurs, chaque lien horizontal 44, 46, 48, 50 est constitué soit par un lien physique direct ne transitant par aucun équipement de communication, soit par un lien transitant par au moins un équipement de communication, à condition que cet équipement de communication ne comprenne pas d'unité fonctionnelle appartenant à un domaine compatible de la couche considérée, comme cela sera défini par la suite.

Chaque unité fonctionnelle 24, 26, 28, 30 utilise des ressources pour assurer l'acheminement d'un flux de données depuis ladite unité fonctionnelle 24, 26, 28, 30 vers une autre unité fonctionnelle 24, 26, 28, 30 à laquelle elle connectée via un lien 42, 44, 46, 48, 50. Ces liens 42, 44, 46, 48, 50 et ces unités fonctionnelles 24, 26, 28, 30 forment ainsi un graphe de réseau de communication 52.

Les unités fonctionnelles 24, 26, 28, 30 d'une même couche 34, 36, 38, 40 gèrent des ressources de communication de même nature, et communiquent entre elles avec des protocoles de communication propres à la couche 34, 36, 38, 40 et partageant une sémantique commune.

Les unités fonctionnelles 24, 26, 28, 30 de couches 34, 36, 38, 40 différentes gèrent quant à elles des ressources de communication de natures différentes les unes par rapport aux autre. Pour communiquer entre elles, bien que gérant des ressources de communication de nature différentes, elles utilisent un protocole commun partagé.

En particulier, chaque unité fonctionnelle applicative 24 gère au moins une partie des ressources constituées par les éléments de sécurité, tels que les association de sécurité, les règles de filtrage, et les identifiants de contextes de compression. A cet effet, chaque unité fonctionnelle applicative 24 comprend typiquement une unité de chiffrement / compression ou d'optimisation, ladite unité de chiffrement / compression ou d'optimisation étant de préférence réalisée au moins partiellement sous forme d'un circuit intégré dédié inclus dans l'équipement 12A, 12B, 22 du réseau 10 qui comprend cette unité fonctionnelle 24. En variante (non représentée), l'unité fonctionnelle applicative 24 est réalisée sous la forme d'un logiciel stocké dans une mémoire et apte à être exécuté par un processeur associé à ladite mémoire, le processeur et la mémoire formant une unité de traitement d'informations incluse dans ledit équipement 12A, 12B, 22.

Chaque unité fonctionnelle de routage 26 gère quant à elle au moins une partie des ressources suivantes : graphe de routage, ordonnancement des files d'attentes, marquage, éléments d'adressage (tels que les labels MPLS, les traductions d'adresse LISP, et les associations adresse/nœud du graphe), et éléments d'ordonnancement des flux (comme, par exemple, les marquages MPLS, les marquages DiffServ, et les motifs Intserv). A cet effet, chaque unité fonctionnelle de routage 26 est typiquement constituée par un processeur de paquets gérant des files d'attente et leur ordonnancement selon des algorithmes implémentés, ledit processeur de paquets étant de préférence réalisé au moins partiellement sous forme d'un circuit intégré dédié inclus dans l'équipement 12A, 12B, 14, 16A, 16B, 16C, 16D, 20, 22 du réseau 10 qui comprend cette unité fonctionnelle 26. En variante (non représentée), le processeur de paquets est réalisé sous la forme d'un logiciel stocké dans une mémoire et apte à être exécuté par un processeur associé à ladite mémoire, le processeur et la mémoire formant une unité de traitement d'informations incluse dans ledit équipement 12A, 12B, 14, 16A, 16B, 16C, 16D, 20, 22.

Chaque unité fonctionnelle de forme d'onde 28 gère typiquement au moins une partie des ressources suivantes : créneaux de trame TDMA, codes CDMA, règles FDMA, modulations FSK, PSK, ASK, et codages d'information binaire en symbole de modulation comme QPSK, 64-QAM, OFDM. A cet effet, chaque unité fonctionnelle de forme d'onde 28 est typiquement formée par des modems comprenant des processeurs numériques commandant lesdites ressources.

Enfin, chaque unité fonctionnelle de couverture 30 gère au moins une partie des ressources suivantes : paramètres de pointage d'antenne, fréquences radio, puissances d'émission. A cet effet, chaque unité fonctionnelle de couverture 30 comprend typiquement des équipements radiofréquence comme par exemple des amplificateurs à faible bruit, des circulateurs, des matrices de commutations radiofréquence, et des unités de contrôle d'antenne (mieux connus sous l'acronyme anglais ACU pour « Antenna Control Unit ») pour l'orientation automatique de l'antenne. Chaque unité de contrôle d'antenne est de préférence réalisée au moins partiellement sous forme d'un circuit intégré dédié inclus dans l'équipement 16A, 16B, 16C, 16D, 18A, 18B du réseau 10 qui comprend l'unité fonctionnelle 30. En variante (non représentée), chaque unité de contrôle d'antenne est réalisée sous la forme d'un logiciel stocké dans une mémoire et apte à être exécuté par un processeur associé à ladite mémoire, le processeur et la mémoire formant une unité de traitement d'informations incluse dans ledit équipement 16A, 16B, 16C, 16D, 18A, 18B.

De préférence, chaque couche 34, 36, 38, 40 englobe au moins une couche telle que définie dans le modèle d'interconnexion des systèmes ouverts, dit dans la suite « modèle ISO », mieux connu sous le nom de modèle OSI provenant de l'anglais « Open Systems Interconnection ». La définition des couches de ce modèle est notamment donnée au chapitre 7 de la norme ISO 7498-1 :1994. La couche applicative 34 englobe par exemple au moins une partie des couches 4 à 7 selon le modèle ISO, la couche réseau 36 englobe au moins la couche de niveau 3 selon le modèle ISO, la couche forme d'onde 38 englobe au moins la couche de niveau 2 selon le modèle ISO, et la couche couverture 40 englobe au moins la couche de niveau 1 selon le modèle ISO. En particulier, chaque couche 34, 36, 38, 40 est constituée par une ou plusieurs couches propres telles que définies dans le modèle ISO, c'est-à-dire que toute couche du modèle ISO entrant dans la composition de l'une des couches 34, 36, 38, 40 est exclusive à ladite couche 34, 36, 38, 40 ; typiquement, la couche applicative 34 est constituée par au moins une des couches 4 à 7 selon le modèle ISO, la couche réseau 36 est constituée par la couche de niveau 3 selon le modèle ISO, la couche forme d'onde 38 est constituée par la couche de niveau 2 selon le modèle ISO, et la couche couverture 40 est constituée par la couche de niveau 1 selon le modèle ISO

En variante, chaque couche 34, 36, 38, 40 est constituée par une couche telle que définie dans le modèle IEEE 802.1.

On définit, pour chaque couche 34, 36, 38, 40, un rôle de couche supérieure ou de couche inférieure de ladite couche 34, 36, 38, 40 relativement aux autres couches 34, 36, 38, 40. Une couche 34, 36, 38, 40 est qualifiée de couche inférieure relativement à une autre couche 34, 36, 38, 40, qualifiée alors de supérieure, lorsque les ressources gérées par les unités fonctionnelles 24, 26, 28, 30 de ladite couche inférieure servent de support aux ressources gérées par les unités fonctionnelles 24, 26, 28, 30 de ladite couche supérieure, c'est-à-dire lorsque, pour au moins un lien horizontal supérieur connectant entre elles une première et une deuxième unités fonctionnelles supérieures de la couche supérieure, l'acheminement d'un flux de données depuis la première unité fonctionnelle supérieure vers la deuxième unité fonctionnelle supérieure nécessite l'utilisation d'un lien horizontal inférieur correspondant ou d'une suite de liens horizontaux inférieurs correspondante à l'intérieur de la ou chaque couche inférieure, ledit lien horizontal inférieur correspondant ou ladite suite de liens horizontaux inférieurs correspondante connectant entre elles une première et une deuxième unités fonctionnelles inférieures de la couche inférieure, la première unité fonctionnelle inférieure étant connectée via un premier lien vertical à la première unité fonctionnelle supérieure et la deuxième unité fonctionnelle inférieure étant connectée via un deuxième lien vertical à la deuxième unité fonctionnelle supérieure. Ainsi, la couche applicative 24 constitue une couche supérieure relativement à chacune des autres couches 26, 28, 30, la couche de routage 26 constitue une couche inférieure relativement à la couche applicative 24 et une couche supérieure relativement aux couches de forme d'onde 28 et de couverture 30, la couche de forme d'onde constitue une couche inférieure relativement aux couches applicative 24 et de routage 26 et une couche supérieure relativement à la couche de couverture 30, et la couche de couverture constitue une couche inférieure relativement à chacune des autres couches 24, 26, 28.

Chaque couche 34, 36, 38, 40 comprend au moins un domaine compatible 54, 56A, 56B, 58A, 58B, 58C, 60A, 60B regroupant une pluralité d'unités fonctionnelles 24, 26, 28, 30 de la couche 34, 36, 38, 40, le ou chaque domaine 54, 56A, 56B, 58A, 58B, 58C, 60A, 60B comprenant un gestionnaire de domaine, respectivement 64, 66A, 66B, 68A, 68B, 70, collectant des informations de contrôle des unités fonctionnelles 24, 26, 28, 30 du domaine 54, 56A, 56B, 58A, 58B, 58C, 60A, 60B et allouant ou fixant des règles d'utilisation de ressources aux unités fonctionnelles 24, 26, 28, 30 du domaine 54, 56A, 56B, 58A, 58B, 58C, 60A, 60B.

Chaque gestionnaire de domaine 64, 66A, 66B, 68A, 68B, 70 est de préférence constitué par un gestionnaire distribué comprenant un ensemble d'automates informatiques coordonnés (non représentés) répartis entre différents équipements de communication 12A, 12B, 14, 16A, 16B, 16C, 16D, 18A, 18B, 20, 22 intégrant chacun une unité fonctionnelle 24, 26, 28, 30 du domaine 54, 56A, 56B, 58A, 58B, 58C, 60A, 60B, chacun de ces automates informatiques étant typiquement réalisé au moins partiellement sous forme d'un circuit intégré dédié inclus dans l'équipement 12A, 12B, 14, 16A, 16B, 16C, 16D, 18A, 18B, 20, 22 du réseau 10 qui comprend cet automate informatique ou, en variante, sous la forme d'un logiciel stocké dans une mémoire et apte à être exécuté par un processeur associé à ladite mémoire, le processeur et la mémoire formant une unité fonctionnelle applicative incluse dans ledit équipement 12A, 12B, 14, 16A, 16B, 16C, 16D, 18A, 18B, 20, 22. Ainsi, chaque gestionnaire de domaine 64, 66A, 66B, 68A, 68B, 70 peut collecter les informations de contrôle des unités fonctionnelles 24, 26, 28, 30 de son domaine 54, 56A, 56B, 58A, 58B, 58C, 60A, 60B et allouer ou fixer les règles d'utilisation des ressources auxdites unités fonctionnelles 24, 26, 28, 30 dans des temps très courts.

Avantageusement, chacun de ces automates informatiques est inclus dans un équipement de communication 12A, 12B, 14, 16A, 16B, 16C, 16D, 18A, 18B, 20, 22 intégrant une unité fonctionnelle de bordure du domaine 54, 56A, 56B, 58A, 58B, 58C, 60A, 60B, c'est-à-dire une unité fonctionnelle 24, 26, 28, 30 qui, bien qu'incluse dans le domaine, 54, 56A, 56B, 58A, 58B, 58C, 60A, 60B, est reliée par un lien vertical 42 ou horizontal 44, 46, 48, 50 à une unité fonctionnelle 24, 26, 28, 30 qui n'appartient pas audit domaine 54, 56A, 56B, 58A, 58B, 58C 60A, 60B.

En particulier, la couche applicative 34 comprend, dans l'exemple représenté, un unique domaine de sécurité compatible 54 ayant pour gestionnaire de domaine un gestionnaire de sécurité 64. Ce gestionnaire de sécurité 64 s'assure de l'exécution de la politique de sécurité du domaine 54. Il définit des associations de sécurité qui autorisent l'acheminement de flux de données entre deux points du domaine de sécurité 54 et fixe les paramètres de sécurité (tels que des éléments secrets, une sélection d'algorithmes de chiffrement et de signatures, et/ou une identification de flux autorisés) nécessaires à cet effet. Le gestionnaire de sécurité 64 coordonne donc les unités fonctionnelles applicatives 24. Il est typiquement réalisé sous la forme d'un gestionnaire distribué comprenant deux automates informatiques (non représentés), un premier étant inclus dans l'un des serveurs câblés 12A, 12B et le deuxième étant inclus dans le serveur sans fil 22.

La couche de routage 36 comprend quant à elle, dans l'exemple représenté toujours, deux domaines de routage compatibles 56A, 56B, un premier domaine de routage 56A correspondant à l'infrastructure fixe 21 et un deuxième domaine de routage 56B correspondant à l'infrastructure mobile 23.

Le premier domaine de routage 56A comprend deux unités fonctionnelles de routage 26 connectées, via des liens verticaux 42, à des unités fonctionnelles applicatives 24 respectives ; ces unités fonctionnelles de routage 26 et les unités fonctionnelles applicatives 24 qui leur sont connectées appartiennent aux serveurs câblés 12A, 12B de l'infrastructure fixe 21. Le premier domaine de routage 56A comprend aussi les unités fonctionnelles de routage 26 appartenant aux routeurs câblés 14 et routeurs satellite 16A, 16B de l'infrastructure fixe 21.

Le deuxième domaine de routage 56B comprend quant à lui une unité fonctionnelle de routage 26 connectée, via un lien vertical 42, à une unité fonctionnelle applicative 24 ; cette unité fonctionnelle de routage 26 et l'unité fonctionnelle applicative 24 qui lui est connectée appartiennent au serveur sans fil 22 de l'infrastructure mobile 23. Le deuxième domaine de routage 56B comprend aussi les unités fonctionnelles de routage 26 appartenant aux routeurs câblés 14 et sans fils 20 et aux routeurs satellite 16C, 16D de l'infrastructure mobile 23.

Chaque domaine de routage 56A, 56B a pour gestionnaire de domaine un gestionnaire dit de bordure 66A, 66B. Chaque gestionnaire de bordure 66A, 66B est en particulier réalisé sous la forme d'un gestionnaire distribué dont les automates informatiques sont inclus dans chacun des équipements 12A, 12B, 16A et 16B pour le premier domaine de routage 56A, et dans chacun des équipements 16C, 16D, 20 et 22 pour le deuxième domaine de routage 56B.

La couche de forme d'onde 38 comprend, dans l'exemple représenté également, trois domaines compatibles dits de forme d'onde 58A, 58B, 58C, les premier et deuxième domaines de forme d'onde 58A, 58B correspondant à l'infrastructure satellite 25, et le troisième domaine de forme d'onde 58C correspondant à l'infrastructure sans fil 27. A cet effet, le premier domaine de forme d'onde 58A comprend deux unités fonctionnelles de forme d'onde 28 connectées, via des liens verticaux 42, à des unités fonctionnelles de routage 26 respectives appartenant au premier domaine de routage 56A, ces unités fonctionnelles de forme d'onde 28 et les unités fonctionnelles de routage 26 qui leur sont connectées appartenant aux routeurs satellite 16A, 16B de l'infrastructure fixe 21. Le deuxième domaine de forme d'onde 58B comprend quant à lui deux unités fonctionnelles de forme d'onde 28 connectées, via des liens verticaux 42, à des unités fonctionnelles de routage 26 respectives appartenant au deuxième domaine de routage 56B, ces unités fonctionnelles de forme d'onde 28 et les unités fonctionnelles de routage 26 qui leur sont connectées appartenant aux routeurs satellite 16C, 16D de l'infrastructures mobile 23. Enfin, le troisième domaine de forme d'onde 58C comprend trois unités fonctionnelles de forme d'onde 28 connectées, via des liens verticaux 42, à des unités fonctionnelles de routage 26 respectives appartenant au deuxième domaine de routage 56B ; ces unités fonctionnelles de forme d'onde 28 et les unités fonctionnelles de routage 26 qui leur sont connectées appartiennent aux routeurs sans fil 20 et au serveur sans fil 22 de l'infrastructure mobile 23.

Chaque domaine de forme d'ondes 58A, 58B, 58C a pour gestionnaire de domaine un gestionnaire dit de sous-réseau à ressources mutualisées 68A, 68B, 68C. Chaque gestionnaire de sous-réseau à ressources mutualisées 68A, 68B, 68C est en particulier réalisé sous la forme d'un gestionnaire distribué dont les automates informatiques sont inclus dans chacun des routeurs 16A, 16B pour le premier domaine de forme d'onde 58A, dans chacun des routeurs 16C, 16D pour le deuxième domaine de forme d'onde 58B, et dans chacun des routeurs sans fil 20 et dans le serveur sans fil 22 pour le troisième domaine de forme d'onde 58C.

Enfin, la couche couverture 40 comprend, dans l'exemple représenté, deux domaines de couverture compatibles 60A, 60B correspondant aux antennes de l'infrastructure satellite 25. Un premier domaine de couverture 60A comprend deux premières unités fonctionnelles de couverture 30 connectées, via des liens verticaux 42, à des unités fonctionnelles de forme d'onde 28 respectives appartenant au premier domaine de forme d'onde 58A, et une unité fonctionnelle de couverture 30 appartenant au premier satellite 18A. Le deuxième domaine de couverture 60B comprend quant à lui quatre deuxièmes unités fonctionnelles de couverture 30 connectées, via des liens verticaux 42, à deux unités fonctionnelles de forme d'onde 28 appartenant au deuxième domaine de forme d'onde 58B, ainsi qu'une unité fonctionnelle de couverture 30 appartenant au deuxième satellite 18B. Les premières unités fonctionnelles de couverture 30 et les unités fonctionnelles de forme d'onde 28 qui leur sont connectées appartiennent aux routeurs satellite 16A, 16B de l'infrastructure fixe 21 ; les deuxièmes unités fonctionnelles de couverture 30 et les unités fonctionnelles de forme d'onde 28 qui leur sont connectées appartiennent aux routeurs satellite 16C, 16D de l'infrastructure mobile 23.

Chaque domaine de couverture 60A, 60B a pour gestionnaire de domaine un gestionnaire de couverture 70A, 70B. Chaque gestionnaire de couverture 70A, 70B est en particulier réalisé sous la forme d'un gestionnaire distribué dont les automates informatiques sont inclus dans chacun des routeurs satellite 16A, 16B, 16C et 16D.

Pour chaque domaine compatible 54, 56A, 56B, 58A, 58B, 58C, 60, désigné ici « domaine principal », on distingue des domaines voisins, constitués par des domaines 54, 56A, 56B, 58A, 58B, 58C différents du domaine principal, appartenant à la même couche 34, 36, 38 que le domaine principal, et comprenant chacun au moins une unité fonctionnelle raccordée via un lien horizontal 44, 46, 48 à une unité fonctionnelle principale du domaine principal, des domaines support, appartenant à des couches 36, 38, 40 inférieures et comprenant chacun au moins une unité fonctionnelle raccordée via un lien vertical 42 à une unité fonctionnelle principale du domaine principal, et des domaines supérieurs, appartenant à des couches 34, 36 supérieures et comprenant chacun au moins une unité fonctionnelle raccordée via un lien vertical 42 à une unité fonctionnelle principale du domaine principal.

Ainsi, les premier et deuxième domaines de routage 56A, 56B, qui comprennent des unités fonctionnelles de routage 26 connectées à des unités fonctionnelles applicatives 24 du domaine de sécurité 24, forment des domaines support au domaine de sécurité 24, ledit domaine de sécurité 24 formant quant à lui un domaine supérieur aux premier et deuxième domaines de routage 56A, 56B. De plus, le premier domaine de forme d'onde 58A, qui comprend des unités fonctionnelles de forme d'onde 28 connectées à des unités fonctionnelles de routage 26 du premier domaine de routage 56A, forme un domaine support audit premier domaine de routage 56A, ledit premier domaine de routage 56A formant quant à lui un domaine supérieur au premier domaine de forme d'onde 58A. Par ailleurs, les deuxième et troisième domaines de forme d'onde 58B, 58C, qui comprennent des unités fonctionnelles de forme d'onde 28 connectées à des unités fonctionnelles de routage 26 du deuxième domaine de routage 56B, forment chacun un domaine support audit deuxième domaine de routage 56B, ledit deuxième domaine de routage 56B formant quant à lui un domaine supérieur aux deuxième et troisième domaines de forme d'onde 58B, 58C. En outre, le premier domaine de couverture 60A, qui comprend des unités fonctionnelles de couverture 30 connectées à des unités fonctionnelles de forme d'onde 28 du premier domaine de forme d'onde 58A, forme un domaine support audit premier domaine de forme d'onde 58A, ledit premier domaine de forme d'onde 58A formant quant à lui un domaine supérieur au premier domaine de couverture 60A. Enfin, le deuxième domaine de couverture 60B, qui comprend des unités fonctionnelles de couverture 30 connectées à des unités fonctionnelles de forme d'onde 28 du deuxième domaine de forme d'onde 58B, forme un domaine support audit deuxième domaine de forme d'onde 58B, ledit deuxième domaine de forme d'onde 58B formant quant à lui un domaine supérieur au deuxième domaine de couverture 60B.

Les premier et deuxième domaines de couverture 60A, 60B forment également l'un pour l'autre des domaines voisins, dans la mesure où ils appartiennent tous deux à la couche de couverture 40 et comprennent des unités fonctionnelles 30 raccordées l'une à l'autre via des liens horizontaux 50. Il en va de même pour les premier et deuxième domaines de routage 56A, 56B, qui appartiennent tous deux à la couche de routage 36 et comprennent des unités fonctionnelles 26 raccordées les unes aux autres via des liens horizontaux 46.

Le réseau 10 comprend également un orchestrateur de service 80, programmé pour détecter l'émission, par une première application (non représentée) fonctionnant sur un premier terminal 82 (Figure 1) raccordé au réseau 10, d'un flux de données à destination d'une deuxième application (non représentée) fonctionnant sur un deuxième terminal distant 84 (Figure 1) lui aussi raccordé au réseau 10, et pour déclencher en réponse, en fonction du flux de données émis et de logiques de services prédéterminées, une première requête de service d'acheminement pour l'acheminement du flux de données par le réseau 10 depuis le premier terminal 82 jusqu'au deuxième terminal 84, ladite première requête de service d'acheminement fixant des premiers objectifs de niveau de services, exprimés dans un langage prédéterminé défini par le protocole commun partagé entre les unités fonctionnelles 24, 26, 28, 30 des différentes couches 34, 36, 38, 40 et tel que le gestionnaire de domaine 64, 66A, 66B, 68A, 68B, 70 de chaque domaine compatible 54, 56A, 56B, 58A, 58B, 58C, 60A, 60B puisse décoder des objectifs de niveau de services lorsqu'ils sont exprimés dans ce langage prédéterminé.

Cet orchestrateur de service 80 est typiquement réalisé sous la forme d'un programme stocké dans une mémoire 81 (Figure 1) et apte à être exécuté par un processeur 83 (Figure 1) associé à la mémoire 81, le processeur 83 et la mémoire 81 formant une unité de traitement d'informations 85 (Figure 1) incluse, par exemple, dans le serveur d'accès sans fil 22, le programme étant par exemple configuré pour utiliser un langage YANG modélisant les services réseaux pour agir sur des éléments du réseau 10 par des interfaces par exemple de type NETCONF.

On notera que, dans l'exemple représenté, il n'est pas présenté d'équipement de communication intégrant des unités fonctionnelles appartenant à un domaine incompatible, c'est-à-dire un domaine dont le gestionnaire de domaine ne serait pas adapté pour décoder des objectifs de niveau de services lorsqu'ils sont exprimés dans le langage prédéterminé. Si un tel équipement de communication devait néanmoins être intégré au réseau 10, son domaine d'appartenance serait vu par le reste du réseau 10 comme constituant un simple lien horizontal ou vertical entre les unités fonctionnelles qu'il contribue à mettre en communication. On considérera donc dans la suite que, à chaque fois qu'il est fait référence à un « domaine », il s'agit d'un domaine compatible, et que toute unité fonctionnelle 24, 26, 28, 30 ou tout gestionnaire de domaine 64, 66A, 66B, 68A, 68B, 68C, 70A, 70B évoqué dans la demande est attaché à un domaine compatible.

On notera également que, bien qu'il ait été décrit que chaque couche 34, 36, 38, 40 comprend au moins un domaine compatible, cette caractéristique n'est pas obligatoire. Pour que l'invention puisse être mise en œuvre, il suffit qu'au moins deux couches parmi les couches 34, 36, 38, 40 comprennent au moins un domaine compatible.

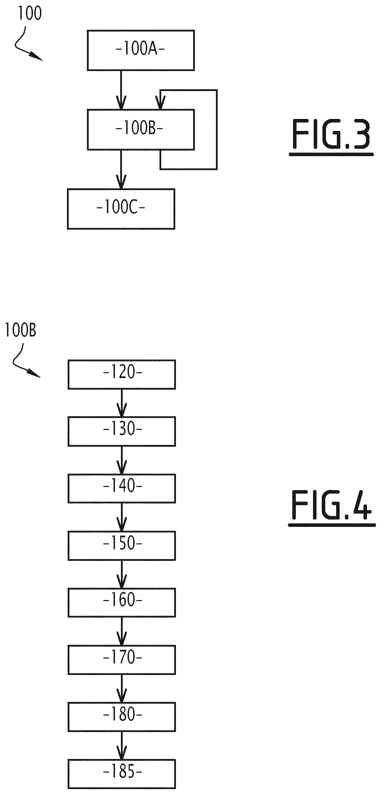

Un procédé 100 de préparation du réseau 10 à l'acheminement d'un flux de données à travers ledit réseau 10 va maintenant être décrit, en référence à la Figure 3.

Ce procédé comprend une étape préliminaire 100A de planification optimiste du réseau 10, suivie d'une première étape 100B de construction et d'actualisation d'une topologie du réseau 10, et d'une deuxième étape 100C de construction d'une route pour l'acheminement d'un flux de données à travers le réseau 10.

L'étape préliminaire 100A est réalisée en amont, lors du déploiement du réseau de communication 10. Elle consiste à définir les principales unités fonctionnelles 24, 26, 28, 30 du réseau 10 ainsi que les liens 42, 44, 46, 48, 50 reliant ces différentes unités fonctionnelles 24, 26, 28, 30 entre elles, les capacités de transmission de ces liens 42, 44, 46, 48, 50 étant estimées de manière optimiste.

Comme représenté sur la Figure 4, l'étape 100B de construction et d'actualisation d'une topologie du réseau 10 comprend une première sous-étape 120 de mise en relation des unités fonctionnelles 24, 26, 28, 30. Cette mise en relation est basée sur le protocole internet et permet de récolter des attributs, dont des métriques d'ingénierie de trafic (mieux connues sous le nom de « métriques TE ») concernant les liens horizontaux 44, 46, 48, 50. La planification optimiste de l'étape 110 est corrigée dynamiquement au moyen de règles implicites de découverte intégrées aux unités fonctionnelles 24, 26, 28, 30 et permettant à ces dernières d'identifier les frontières du domaine 54, 56A, 56B, 58A, 58B, 58C, 60A, 60B auquel elles appartiennent et de déduire une éventuelle utilisation des ressources d'une couche inférieure en fonction des attributs issus des échanges conduits sur la base du protocole internet. Par exemple, une règle implicite établit qu'un lien horizontal 44, 46, 48 partant d'une unité fonctionnelle 24, 26, 28, 30 utilise les ressources d'une couche inférieure lorsque les métriques TE de ce lien 44, 46, 48 présentent une valeur supérieure à une valeur seuil.

Cette mise en relation permet, au cours d'une sous-étape 130 ultérieure, la collecte d'informations de contrôle, au cours de laquelle le gestionnaire de domaine 64, 66A, 66B, 68A, 68B, 68C, 70A, 70B de chaque domaine 54, 56A, 56B, 58A, 58B, 58C, 60A, 60B collecte des informations de contrôle des unités fonctionnelles 24, 26, 28, 30 dudit domaine 54, 56A, 56B, 58A, 58B, 58C, 60A, 60B, lesdites informations de contrôle étant typiquement constituées par les états de liens de chaque couche 34, 36, 38, 40, à savoir : les rapports signal sur bruit pour la couche 40, les temps d'attente avant émission pour la couche 38, les débits disponibles par type de trafic pour la couche 36, et les taux de compression applicables pour la couche 34.

La sous-étape 130 est suivie d'une étape de découverte 140, au cours de laquelle le gestionnaire de domaine 64, 66A, 66B, 68A, 68B, 68C, 70A, 70B de chaque domaine 54, 56A, 56B, 58A, 58B, 58C, 60A, 60B découvre le ou chaque domaine support 56A, 56B, 58A, 58B, 58C, 60A, 60B qui lui est associé, lorsqu'un tel domaine support existe, le ou chaque domaine voisin 56A, 56B, 58A, 58B, 60A, 60B qui lui est associé, lorsqu'un tel domaine voisin existe, et le ou chaque domaine supérieur 54, 56A, 56B, 58A, 58B qui lui est associé, lorsqu'un tel domaine supérieur existe. Cette étape de découverte 140 est typiquement gérée grâce à des échanges appliquant le protocole internet entre les unités fonctionnelles 24, 26, 28, 30 des différents domaines 54, 56A, 56B, 58A, 58B, 58C, 60A, 60B et aux règles implicites de découverte appliquées à ces échanges, notamment au moyen de la remontée des métriques TE mesurées par l'ensemble des gestionnaires 64, 66A, 66B, 68A, 68B, 68C, 70A, 70B des domaines 54, 56A, 56B, 58A, 58B, 58C, 60A, 60B considérés.

La sous-étape 140 est elle-même suivie d'une sous-étape 150 de détermination d'une cartographie capacitaire de chaque domaine 54, 56A, 56B, 58A, 58B, 58C, 60A, 60B. Au cours de cette étape 150, le gestionnaire de domaine 64, 66A, 66B, 68A, 68B, 68C, 70A, 70B de chaque domaine 54, 56A, 56B, 58A, 58B, 58C, 60A, 60B détermine, à partir des informations de contrôle collectées lors de l'étape 120 et d'éventuelles ressources allouées aux unités fonctionnelles 24, 26, 28, 30 dudit domaine 54, 56A, 56B, 58A, 58B, 58C, 60A, 60B et destinées au transfert d'un flux de données antérieur à travers le domaine 54, 56A, 56B, 58A, 58B, 58C, 60A, 60B, une cartographie capacitaire du domaine 54, 56A, 56B, 58A, 58B, 58C, 60A, 60B, ladite cartographie comprenant, pour au moins un couple formé par un point d'entrée dans le domaine 54, 56A, 56B, 58A, 58B, 58C, 60A, 60B et un point cible, une mesure des capacités courante et future du domaine 54, 56A, 56B, 58A, 58B, 58C, 60A, 60B à acheminer un flux de données entre le point d'entrée et le point cible, le point d'entrée étant constitué par une unité fonctionnelle 24, 26, 28, 30 du domaine 54, 56A, 56B, 58A, 58B, 58C, 60A, 60B et le point cible par une unité fonctionnelle appartenant à la même couche 34, 36, 38, 40 que le domaine 54, 56A, 56B, 58A, 58B, 58C, 60A, 60B.

Ensuite, lors d'une première sous-étape de partage 160, le gestionnaire de domaine 66A, 66B, 68A, 68B, 68C, 70A, 70B du ou de chaque domaine support 56A, 56B, 58A, 58B, 58C, 60A, 60B partage la cartographie capacitaire dudit domaine support 56A, 56B, 58A, 58B, 58C, 60A, 60B avec le gestionnaire de domaine 64, 66A, 66B, 68A, 68B, 68C du domaine principal 54, 56A, 56B, 58A, 58B, 58C associé.

Puis, lors d'une sous-étape d'actualisation 170, le gestionnaire de domaine 64, 66A, 66B, 68A, 68B, 68C du domaine principal 54, 56A, 56B, 58A, 58B, 58C actualise la cartographie capacitaire dudit domaine principal 54, 56A, 56B, 58A, 58B, 58C en fonction de la ou chaque cartographie capacitaire de domaine support partagée avec le gestionnaire de domaine 64, 66A, 66B, 68A, 68B, 68C du domaine principal 54, 56A, 56B, 58A, 58B, 58C. Lorsque le domaine principal possède au moins un domaine voisin, comme c'est le cas ici pour les domaines 56A, 56B, 58A, 58B, 58C, cette cartographie capacitaire actualisée est finalement partagée, lors d'une deuxième sous-étape de partage 180, par le gestionnaire de domaine 66A, 66B, 68A, 68B, 68C dudit domaine principal 56A, 56B, 58A, 58B, 58C avec le gestionnaire de domaine 66A, 66B, 68A, 68B, 68C du ou de chaque domaine 56A, 56B, 58A, 58B, 58C formant un domaine voisin audit domaine principal 56A, 56B, 58A, 58B, 58C. Lorsque le domaine principal possède au moins un domaine supérieur, comme c'est le cas ici pour les domaines 56A, 56B, 58A, 58B, 58C, cette cartographie capacitaire actualisée est également partagée, lors d'une troisième sous-étape de partage 185, par le gestionnaire de domaine 66A, 66B, 68A, 68B, 68C dudit domaine principal 56A, 56B, 58A, 58B, 58C avec le gestionnaire de domaine 64, 66A, 66B du ou de chaque domaine 54, 56A, 56B formant un domaine supérieur audit domaine principal 56A, 56B, 58A, 58B, 58C.

L'étape 100A est répétée continuellement au cours de la vie du réseau 10 de manière à maintenir à jour les cartographies capacitaires des domaines 54, 56A, 56B, 58A, 58B, 58C, 60A, 60B.

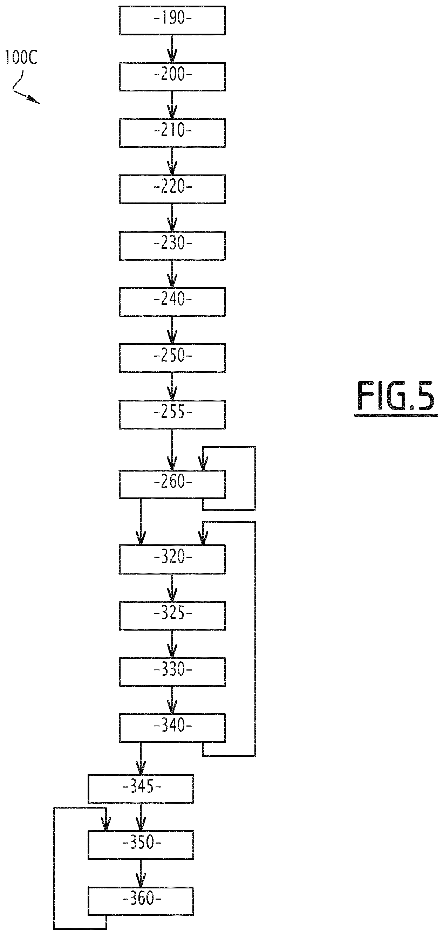

En référence à la Figure 5, l'étape 100C de construction d'une route pour l'acheminement d'un flux de données à travers le réseau 10 comprend une première sous-étape 190 de connexion du premier terminal 82 au réseau 10.

Cette étape 190 est suivie d'une étape 200 d'émission d'un premier flux de données. Au cours de cette étape 200, une première application fonctionnant sur le premier terminal 82 émet un premier flux de données à destination d'une deuxième application fonctionnant sur le deuxième terminal 84.

Cette émission est détectée par l'orchestrateur de service 80 au cours d'une étape de détection 210.

Suite à cette étape 210, l'orchestrateur de service 80 déclenche, lors d'une étape de déclenchement 220, à partir du flux de données émis et de logiques de services prédéterminées, la première requête de service d'acheminement pour l'acheminement du premier flux à travers le réseau 10 jusqu'au deuxième terminal 84.

Puis, lors d'une nouvelle étape de collecte 230, l'orchestrateur de service 80 collecte la cartographie capacitaire du ou de chaque domaine de la couche de routage 36 ayant au moins une unité fonctionnelle 26 directement atteignable par le premier terminal 82, c'est-à-dire une unité fonctionnelle 26 raccordée via un lien horizontal 46 à une unité fonctionnelle de même niveau (non représentée) incluse dans le premier terminal 82. Dans l'exemple représenté, un seul domaine est dans ce cas, ce domaine étant constitué par le premier domaine de routage 56A.

Ensuite, l'orchestrateur de service 80 désigne, lors d'une étape de désignation 240, en fonction de la ou chaque cartographie capacitaire collectée, un domaine d'entrée 86 par lequel faire entrer le premier flux dans la couche de routage 36, ce domaine d'entrée 86 étant constitué par un domaine candidat 87 ayant au moins une unité fonctionnelle 26 directement atteignable par le premier terminal 82. En particulier, l'orchestrateur de service 80 choisit comme domaine d'entrée 86 celui des domaines candidats 87 dont la cartographie capacitaire indique qu'il existe une unité fonctionnelle 26 à l'intérieur de ce domaine 56, directement atteignable par le premier terminal 82, pour laquelle les capacités courante et future dudit domaine candidat 87 à acheminer un flux de données entre ladite unité fonctionnelle 26 et un point cible constitué par le deuxième terminal 84 sont maximales. Dans l'exemple représenté, il existe un unique domaine candidat 87 constitué par le premier domaine de routage 56A, et il est donc automatiquement désigné domaine d'entrée 86 par l'orchestrateur de service 80.

Puis, lors d'une étape d'attribution 250, l'orchestrateur de service 80 attribue à une unité fonctionnelle candidate 88 du domaine d'entrée 86, directement atteignable par le premier terminal 82, en fonction de la ou chaque cartographie capacitaire collectée, un rôle d'unité fonctionnelle d'entrée 89. En particulier, l'orchestrateur de service 80 choisit comme unité fonctionnelle d'entrée 89 celle des unités fonctionnelles candidates 88 pour laquelle la cartographie capacitaire du domaine d'entrée 86 indique que les capacités courante et future du domaine d'entrée 86 à acheminer un flux de données entre ladite unité fonctionnelle candidate 88 et le point cible constitué par le deuxième terminal 84 sont maximales. Dans l'exemple représenté, les unités fonctionnelles candidates 87 du domaine d'entrée 86 sont constituées par les unités fonctionnelles de routage 26 des serveurs câblés 12A, 12B, lesquels sont tous les deux connectés via des liaisons directes au premier terminal 82 ; ces unités fonctionnelles candidates 87 étant au nombre de deux, l'orchestrateur de service 80 choisit comme unité fonctionnelle d'entrée 89 celle de ces unités fonctionnelles candidates 87 pour laquelle la cartographie capacitaire du domaine 86 indique que les capacités courante et future du domaine d'entrée 86 à acheminer un flux de données entre ladite unité fonctionnelle candidate 87 et le point cible constitué par le deuxième terminal 84 sont maximales.

Suite à l'étape 250, l'orchestrateur de service 80 émet la première requête de service d'acheminement lors d'une étape d'émission 255, l'orchestrateur de service 80 constituant de la sorte une entité 89 émettrice de la première requête de service d'acheminement, puis transmet cette première requête de service d'acheminement au gestionnaire de domaine 66A du domaine d'entrée 86, les premiers objectifs de niveau de service restant exprimés dans le langage prédéterminé.

L'étape 255 est suivie d'une étape 260 de calcul d'une route principale 90 reliant l'unité fonctionnelle d'entrée 89 à une unité fonctionnelle de sortie 91 par laquelle le deuxième terminal 84 est directement atteignable, c'est-à-dire une unité fonctionnelle 91 raccordée via un lien horizontal 46 à une unité fonctionnelle de même niveau (non représentée) incluse dans le deuxième terminal 84, cette route principale 90 respectant les objectifs de niveau de service fixés et étant formée par un lien horizontal 46 ou une suite de liens horizontaux 46 reliant entre elles des unités fonctionnelles de transit 92 appartenant à au moins un domaine traversé 93A, 93B de la couche de routage 36. Dans l'exemple représenté, le deuxième terminal 84 n'étant directement atteignable que par une unité fonctionnelle 26 du deuxième domaine de routage 56B, c'est cette unité fonctionnelle 26 qui constitue l'unité fonctionnelle de sortie 91. Par ailleurs, l'unité fonctionnelle de sortie 91 étant dans un domaine différent du domaine d'entrée 86, les domaines traversés 93A, 93B sont au moins au nombre de deux, ces domaines 93A, 93B comprenant nécessairement le domaine d'entrée 86 et le domaine de sortie 94 auquel appartient l'unité fonctionnelle de sortie 91.

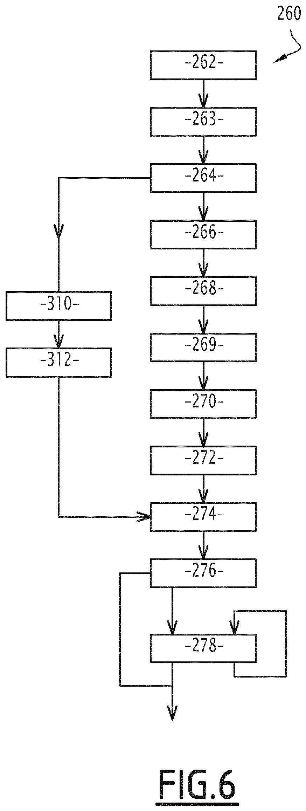

Comme visible sur la Figure 6, l'étape de calcul 260 comprend, pour un premier domaine traversé 93A, constitué par le domaine d'entrée 86, une sous-étape d'information 262 au cours de laquelle le gestionnaire de domaine 66A du premier domaine traversé 93A est informé qu'une unité fonctionnelle 26 dudit domaine traversé 93A a été sélectionnée comme point entrant 95 de la route principale 90 dans ledit domaine traversé 93A. Pour le premier domaine traversé 93A, ce point entrant 95 est constitué par l'unité fonctionnelle d'entrée 89.

Cette première sous-étape 262 est suivie d'une sous-étape de réception 263 au cours de laquelle le gestionnaire de domaine 66A du premier domaine traversé 93A reçoit la première requête de service d'acheminement.

Ensuite, le gestionnaire de domaine 66A du premier domaine traversé 93A recherche, lors d'une sous-étape de recherche 264, si le deuxième terminal 84 est directement atteignable par une unité fonctionnelle 26 dudit domaine traversé 93A. Le deuxième terminal 84 n'étant ici pas directement atteignable par une unité fonctionnelle 26 du premier domaine traversé 93A, cette sous-étape 264 est suivie d'une sous-étape de détermination 266.

Au cours de la sous-étape de détermination 266, le gestionnaire de domaine 66A du premier domaine traversé 93A détermine, en fonction de la cartographie capacitaire du ou de chaque domaine voisin, un deuxième domaine traversé 93B, appartenant à la couche de routage 36, par lequel faire transiter la route principale 90. En particulier, le gestionnaire de domaine 66A du premier domaine traversé 93A choisit comme deuxième domaine traversé celui des domaines voisins dont la cartographie capacitaire indique qu'il existe au moins une unité fonctionnelle pivot 96 à l'intérieur de ce domaine, directement atteignable par une unité fonctionnelle 26 du premier domaine traversé 93A, c'est-à-dire connectée par un lien horizontal 46 à une unité fonctionnelle 26 du premier domaine traversé 93A, pour laquelle la somme des capacités courante et future du premier domaine traversé 93A à acheminer un flux de données entre le point entrant 95 et l'unité fonctionnelle pivot 96 avec les capacités courante et future dudit domaine voisin à acheminer un flux de données entre ladite unité fonctionnelle pivot 96 et un point cible constitué par le deuxième terminal 84 sont maximales. Dans l'exemple représenté, c'est ainsi le deuxième domaine de routage 56B qui constitue le deuxième domaine traversé 93A.

Ensuite, le gestionnaire de domaine 66A du premier domaine traversé 93A sélectionne, au cours d'une sous-étape de sélection 268, l'unité fonctionnelle pivot 96 comme point entrant 95 de la route principale 90 dans le deuxième domaine traversé 93B et comme point de destination 97 de la route principale 90 à atteindre depuis le premier domaine traversé 93A.

La sous-étape 268 est suivie d'une sous-étape de détermination 269, au cours de laquelle le gestionnaire de domaine 66A du premier domaine traversé 93A détermine une promesse de niveau de service respectant les premiers objectifs de niveau de service pour l'acheminement du flux de données depuis le point entrant 95 jusqu'au point de destination 97.

Ensuite le gestionnaire de domaine 66A du premier domaine traversé 93A communique au gestionnaire de domaine 66B du deuxième domaine traversé 93B, au cours d'une sous-étape de communication 270, une information portant sur le point entrant 95 sélectionné dans ledit deuxième domaine traversé 93B.

Puis, suite à la sous-étape 270, le gestionnaire de domaine 66A du premier domaine traversé 93A transmet, lors d'une sous-étape de transmission 272, une deuxième requête de service d'acheminement au gestionnaire de domaine 66B du deuxième domaine traversé 93B, ladite deuxième requête de service d'acheminement étant basée sur la première requête de service d'acheminement et incluant des deuxièmes objectifs de niveau de services, exprimés dans le langage prédéterminé. Ces deuxièmes objectifs de niveau de services sont calculés de sorte que la combinaison des deuxièmes objectifs de niveau de service avec la promesse de niveau de service du premier domaine traversé 93A respecte les premiers objectifs de niveau de service.

Ensuite le gestionnaire de domaine 66A du premier domaine traversé 93A calcule, au cours d'une sous-étape de calcul 274, au moyen de la cartographie capacitaire du premier domaine traversé 93A, un tronçon de route principale reliant le point entrant 95 au point de destination 97 dudit domaine 93A, ledit tronçon respectant la promesse de niveau de service et étant formé par un lien horizontal 46 ou une suite de liens horizontaux 46 partant d'unités fonctionnelles 26 du premier domaine traversé 93A.

Cette sous-étape 273 est suivie d'une sous-étape d'identification 276 au cours de laquelle le gestionnaire de domaine 66A du premier domaine traversé 93A recherche des liens horizontaux 46 composant le tronçon de route principale qui utiliseraient les ressources de couches inférieures, telles que la couche de forme d'onde 38 et la couche couverture 40. Dans l'exemple représenté, le lien 46 reliant une première unité fonctionnelle de transit 92A, constituée par la dernière unité fonctionnelle 26 du premier domaine traversé 93A par laquelle la route principale 90 transite, à une deuxième unité fonctionnelle de transit 92B, constituée par le point de destination 97, étant constitué par un tel lien, la sous-étape 276 est suivie d'une sous-étape 278 de construction d'une route de support de premier niveau 98 entre lesdites première et deuxième unités fonctionnelles de transit 92A, 92B.

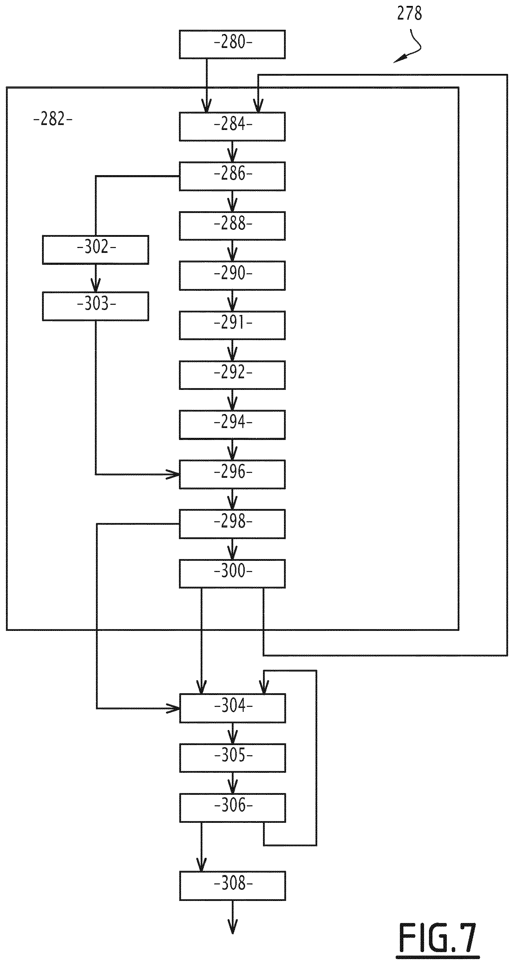

Cette sous-étape 278 comprend elle-même plusieurs sous-étapes 280, 282, 304, 306, 308, comme visible sur la Figure 7.

Une première de ces sous-étapes 280, 282, 304, 306, 308 est une sous-étape de transmission 280 au cours de laquelle le gestionnaire de domaine 66A du premier domaine traversé 93A transmet au gestionnaire de domaine d'un premier domaine support 78A, en l'occurrence constitué par le premier domaine de forme d'onde 58A, une requête d'acheminement d'un flux de données depuis la première unité fonctionnelle de transit 92A jusqu'à la deuxième unité fonctionnelle de transit 92B, ladite requête d'acheminement comprenant les objectifs de niveau de services, exprimés dans le langage prédéterminé.

Cette sous-étape 280 est suivie par une sous-étape de calcul 282 au cours de laquelle est calculée, en fonction de la cartographie capacitaire dudit premier domaine de support 78A, la route de support 98 de sorte à ce qu'elle respecte les objectifs de niveau de service fixés, la route de support 98 étant constituée d'un lien horizontal 48 ou d'une suite de liens horizontaux 48 reliant entre elles des unités fonctionnelles de support 99A, 99B appartenant à la même couche que le premier domaine support 78A, une première desdites unités fonctionnelles support 99A appartenant au premier domaine support 78A et étant connectée via un lien vertical 42 à la première unité fonctionnelle de transit 92A, et une deuxième desdites unités fonctionnelles de support 99B étant connectée via un lien vertical 42 à la deuxième unité fonctionnelle de transit 92A.

L'étape de calcul 282 comprend, pour le premier domaine support 78A, une sous-étape d'information 284 au cours de laquelle le gestionnaire de domaine 68A du premier domaine support 78A est informé qu'une unité fonctionnelle 28 dudit premier domaine support 78A a été sélectionnée comme point entrant de la route support 98 dans ledit domaine 78A.

Cette première sous-étape 284 est suivie d'une sous-étape de réception 285 au cours de laquelle le gestionnaire de domaine 68A du premier domaine support 78A reçoit une première requête de service support, ladite première requête de service support étant basée sur la première requête de service d'acheminement et incluant des premiers objectifs de niveau de services support, exprimés dans le langage prédéterminé. Ces premiers objectifs de niveau de services support sont calculés de sorte à respecter la promesse de niveau de service du premier domaine traversé 93A.

Ensuite, le gestionnaire de domaine 68A du premier domaine support 78A recherche, lors d'une sous-étape de recherche 286, si le point de destination 97 est raccordé via un lien vertical 42 à une unité fonctionnelle 28 dudit premier domaine support 78A. Cela n'étant pas le cas ici, cette sous-étape 286 est alors suivie d'une sous-étape de détermination 288.

Au cours de la sous-étape de détermination 288, le gestionnaire de domaine 68A du premier domaine support 78A détermine, en fonction de la cartographie capacitaire du ou de chaque domaine adjacent, un deuxième domaine support 78B, appartenant à la même couche 38, par lequel faire transiter la route support 98. En particulier, le gestionnaire de domaine 68A du premier domaine support 78A choisit comme deuxième domaine support 78B celui des domaines adjacents dont la cartographie capacitaire indique qu'il existe au moins une unité fonctionnelle pivot à l'intérieur de ce domaine, directement atteignable par une unité fonctionnelle 28 du premier domaine support 78A, pour laquelle la somme des capacités courante et future du premier domaine support 78A à acheminer un flux de données entre le point entrant et l'unité fonctionnelle pivot avec les capacités courante et future dudit domaine adjacent à acheminer un flux de données entre ladite unité fonctionnelle pivot et un point cible constitué par une unité fonctionnelle 28 raccordée via un lien vertical 42 à la deuxième unité fonctionnelle de transit 92B sont maximales. Dans l'exemple représenté, c'est ainsi le deuxième domaine de forme d'onde 58B qui constitue le deuxième domaine support 78B.

Ensuite, le gestionnaire de domaine 68A du premier domaine support 78A sélectionne, au cours d'une sous-étape de sélection 290, l'unité fonctionnelle pivot comme point entrant de la route support 98 dans le deuxième domaine support 78B et comme point de destination de la route support 98 depuis le premier domaine support 78A.

La sous-étape 290 est suivie d'une sous-étape de détermination 291, au cours de laquelle le gestionnaire de domaine 68A du premier domaine support 78A détermine une promesse de niveau de service respectant les premiers objectifs de niveau de services support pour l'acheminement du flux de données depuis le point entrant de la route support 98 dans le premier domaine support 78A jusqu'au point de destination de la route support 98 depuis ledit domaine 78A.

Ensuite le gestionnaire de domaine 68A du premier domaine support 78A communique au gestionnaire de domaine 68B du deuxième domaine support 78B, au cours d'une sous-étape de communication 292, une information portant sur le point entrant sélectionné dans ledit deuxième domaine support 78B.

Puis, suite à la sous-étape 292, le gestionnaire de domaine 68A du premier domaine support 78A transmet, lors d'une sous-étape de transmission 294, une deuxième requête de service support au gestionnaire de domaine 68B du deuxième domaine support 78B, ladite deuxième requête de service support étant basée sur la première requête de service support et incluant des deuxièmes objectifs de niveau de services support, exprimés dans le langage prédéterminé. Ces deuxièmes objectifs de niveau de services support sont calculés de sorte que la combinaison des deuxièmes objectifs de niveau de services support avec la promesse de niveau de service du premier domaine support 78A respecte les premiers objectifs de niveau de services support.

Ensuite le gestionnaire de domaine 68A du premier domaine support 78A calcule, au cours d'une sous-étape de calcul 296, au moyen de la cartographie capacitaire du premier domaine support 78A, un tronçon de route principale reliant le point entrant au point de destination dudit domaine 78A, ledit tronçon respectant les objectifs de niveau de service et étant formé par un lien horizontal 48 ou une suite de liens horizontaux 48 partant d'unités fonctionnelles 28 du premier domaine support 78A.

Cette sous-étape 296 est suivie d'une sous-étape d'identification 298 au cours de laquelle le gestionnaire de domaine 68A du premier domaine support 78A recherche des liens horizontaux 48 composant le tronçon de route support qui utiliseraient les ressources de couches inférieures, telles que la couche couverture 40.

Dans le cas où un tel lien horizontal 48 existe, comme dans l'exemple représentée, la sous-étape 298 est suivie d'une sous-étape 300 de construction d'une route de support de second niveau 101 entre les unités fonctionnelles 28 raccordées l'une à l'autre par ledit lien horizontal 48. Cette sous-étape 300 est répétée pour chaque lien horizontal 48 composant le tronçon de route support et utilisant les ressources de la couche inférieure.

Dans le cas où un tel lien horizontal 48 n'existe pas, la sous-étape 298 est suivie de la répétition de l'étape 282, appliquée au deuxième domaine support 78B. Dans l'exemple représenté, la deuxième unité fonctionnelle de support 99B appartenant au deuxième domaine support 78B, l'étape 286 n'est pas suivie des sous-étapes 288 à 294 mais, à la place, par une sous-étape de désignation 302 au cours de laquelle ladite unité fonctionnelle 99B est désignée par le gestionnaire de domaine 68B du deuxième domaine support 78B comme point de destination de la route support 98 à atteindre depuis le deuxième domaine support 78B.

Cette sous-étape 302 est suivie par une sous-étape de détermination 303, au cours de laquelle le gestionnaire de domaine 68B du deuxième domaine support 78B détermine une promesse de niveau de service respectant les deuxièmes objectifs de niveau de service pour l'acheminement du flux de données depuis le point entrant de la route support 98 dans le deuxième domaine support 78B jusqu'au point de destination de la route support 98 depuis ledit domaine 78B. Cette sous-étape 312 est elle-même directement suivie par la sous-étape de calcul 296.

Une fois l'étape 282 répétée pour chacun des domaines support utilisés 78A, 78B, le gestionnaire de domaine 68B du dernier domaine support utilisé, en l'occurrence le deuxième domaine support 78B, alloue à chaque unité fonctionnelle de support appartenant audit domaine support 78B, au cours d'une étape d'allocation 304, des ressources suffisantes pour assurer l'acheminement d'un flux de données le long de la route support 98 en respectant les objectifs de niveau de service fixés.

Cette étape 304 est accompagnée d'une étape 305 de punaisage de la route de support 98 à travers le domaine support 78B. Au cours de cette étape de punaisage 305, le gestionnaire de domaine 68B communique à chaque unité fonctionnelle de support du domaine support 78B une marque distinctive prédéterminée, destinée à être portée par des flux transitant sur le réseau 10, et des règles de redirection de flux applicables aux flux portant ladite marque distinctive prédéterminée pour que lesdites unités fonctionnelles de support redirigent ces flux en appliquant ces règles de redirection. Cette marque distinctive prédéterminée est typiquement une marque pouvant être obtenue au moyen de techniques d'encapsulation ou de marquage d'entête de paquet classiques comme, par exemple, la commutation d'étiquette multiprotocole (mieux connue sous l'acronyme anglais MPLS pour « Multiprotocol Label Switching »).

Ces étapes 304 et 305 sont suivies par une étape d'engagement 306 au cours de laquelle chacune desdites unités fonctionnelles de support 99A, 99B engage les ressources allouées à ladite unité fonctionnelle 99A, 99B, puis d'une étape d'information 308 au cours de laquelle l'entité ayant transmis une requête de service support au gestionnaire de domaine 68B dudit domaine support 78B, en l'occurrence le gestionnaire de domaine 68A du premier domaine support 78A, est informée de l'engagement desdites ressources.

Une fois le gestionnaire de domaine 68A du premier domaine support 78A informé de l'engagement desdites ressources, les étapes 304 à 306 sont répétées pour ledit premier domaine support 78A.

Le gestionnaire de domaine 68A du premier domaine support 78A programme ensuite au cours d'une étape de programmation 307 la première unité fonctionnelle de support 99A pour que celle-ci applique aux flux provenant de la couche 36, typiquement au moyen de techniques d'encapsulation ou de marquage d'entête de paquet classiques comme par exemple le MPLS, une marque distinctive destinée à l'identification de ces flux par les unités fonctionnelles de support. Cette marque distinctive est constituée par la marque distinctive prédéterminée utilisée pour le punaisage de la route support 98 lors de l'étape 305.

Enfin, le gestionnaire de domaine 68A du premier domaine support 78A informe le gestionnaire de domaine 66A du premier domaine traversé 93A, lors d'une sous-étape d'information 308, de l'engagement desdites ressources.

Dans le cas où il ne serait pas possible pour le gestionnaire de domaine 68A du premier domaine support 78A de construire une route de support 98 respectant les objectifs de niveau de service, le gestionnaire de domaine 66A du premier domaine traversé 93A en est informé, et celui-ci calcule un nouveau tronçon de route principale reliant le point entrant 95 au point de destination 97 en répétant l'étape 274 ou, si cela est impossible, il détermine un nouveau point de destination 97 en répétant les étapes 266 à 276.

On notera que la sous-étape 300 de construction d'une route de support de second niveau 101 est obtenue par la répétition des sous-étapes 284 à 296, ainsi que des sous-étapes 302 à 306, appliquées aux domaines 60A, 60B de la couche couverture 40 par lesquels transite ladite route de support 101.

De retour à la Figure 6, la sous-étape 278 de construction de la route de support 98 est répétée pour chaque lien horizontal 46 composant le tronçon de route principal et utilisant les ressources de couches inférieures.

Une fois la sous-étape 278 achevée ou, si aucun des liens horizontaux 46 composant le tronçon de route principal n'est identifié à l'étape 276 comme utilisant les ressources de couches inférieures, sitôt après la sous-étape 276, l'étape 260 est répétée pour le deuxième domaine traversé 93B.

A la différence du premier domaine traversé 93A, le deuxième terminal 84 est directement atteignable par une unité fonctionnelle 26 du deuxième domaine traversé 93B. La sous-étape 264 n'est donc pas suivie des sous-étapes 266 à 272 mais, à la place, par une sous-étape de désignation 310 au cours de laquelle le deuxième terminal 84 est désigné par le gestionnaire de domaine 66B du deuxième domaine traversé 93B comme point de destination 97 de la route principale 90 à atteindre depuis le deuxième domaine traversé 93B.

Cette sous-étape 310 est suivie par une sous-étape de détermination 312, au cours de laquelle le gestionnaire de domaine 66B du deuxième domaine traversé 93B détermine une promesse de niveau de service respectant les deuxièmes objectifs de niveau de service pour l'acheminement du flux de données depuis le point entrant 95 jusqu'au point de destination 97.

Cette sous-étape 312 est elle-même suivie par les sous-étapes 274 et 276 et, le cas échéant, par la sous-étape 278, appliquées au deuxième domaine traversé 93B.

De retour à la Figure 5, une fois l'étape 260 répétée pour chacun des domaines traversés 93A, 93B, le gestionnaire de domaine 66B du dernier domaine traversé, en l'occurrence le deuxième domaine traversé 93B, alloue à chaque unité fonctionnelle de transit 92 appartenant audit domaine traversé 93B, au cours d'une étape d'allocation 320, des ressources suffisantes pour assurer l'acheminement d'un flux de données le long de la route principale 90 en respectant les objectifs de niveau de service fixés.

Cette étape 320 est accompagnée d'une étape 325 de punaisage de la route principale 90 à travers le domaine traversé 93B. Au cours de cette étape de punaisage 325, le gestionnaire de domaine 66B communique à chaque unité fonctionnelle de transit 92 du domaine traversé 93B une marque distinctive prédéterminée, destinée à être portée par des flux transitant sur le réseau 10, et des règles de redirection de flux applicables aux flux portant ladite marque distinctive prédéterminée pour que lesdites unités fonctionnelles de support redirigent ces flux en appliquant lesdites règles de redirection. Cette marque distinctive prédéterminée est typiquement une marque pouvant être obtenue au moyen de techniques d'encapsulation ou de marquage d'entête de paquet classiques comme la commutation d'étiquette multiprotocole ou le protocole de séparation localisateur/identificateur (mieux connu sous l'acronyme anglais LISP pour « Locator/Identifier Separation Protocol »).

Ces étapes 320 et 325 sont suivies par une étape d'engagement 330 au cours de laquelle chacune desdites unités fonctionnelles de transit 92 engage les ressources allouées à ladite unité fonctionnelle 92, puis d'une étape d'information 340 au cours de laquelle l'entité ayant transmis la requête d'acheminement de service au gestionnaire de domaine 66B dudit dernier domaine traversé 93B, en l'occurrence le gestionnaire de domaine 66A du premier domaine traversé, de l'engagement desdites ressources.

Une fois le gestionnaire de domaine 66A du premier domaine traversé 93A informé de l'engagement desdites ressources, les étapes 320 à 340 sont répétées pour ledit premier domaine traversé 93A.

Une fois les étapes 320 à 340 réalisées pour chaque domaine traversé 93A, 93B, le gestionnaire de domaine 66A du domaine d'entrée 86 programme au cours d'une étape de programmation 345 l'unité fonctionnelle d'entrée 89 pour que celle-ci applique aux flux provenant du premier terminal 82, typiquement au moyen de techniques d'encapsulation ou de marquage d'entête de paquet classiques comme la MPLS ou le LISP, une marque distinctive destinée à l'identification de ces flux par les unités fonctionnelles de transit 92. Cette marque distinctive est constituée par la marque distinctive prédéterminée utilisée pour le punaisage de la route principale 90 lors de l'étape 325.

Puis chaque gestionnaire de domaine 66A, 66B d'un domaine traversé 93A, 93B surveille, lors d'une étape de surveillance 350, que l'engagement suivi est respecté. Dans le cas où le gestionnaire de domaine 66A, 66B d'un domaine traversé 93A, 93B détecte que cet engagement ne peut plus être respecté avec l'allocation de ressources courant, cette étape 350 est suivie d'une étape de ré-allocation de ressources 360, au cours de laquelle le gestionnaire de domaine 66A, 66B modifie l'allocation de ressources de manière à maintenir l'engagement. Ces étapes 350 et 360 sont répétées tout au long de l'émission du premier flux de données.

Le réseau 10 est alors prêt à acheminer le premier flux de données depuis le premier terminal 82 jusqu'au deuxième terminal 84. Lors de cet acheminement, le premier flux est tout d'abord marqué par l'unité fonctionnelle d'entrée 91, puis il suit la route principale 90 et les routes support de premier et second niveaux 98, 101 grâce au punaisage qui a été fait de ces routes 90, 98, 101. Grâce à l'engagement de ressources des unités fonctionnelles 26, 28, 30 se trouvant le long de ces routes, 90, 98, 101, engagement pris de manière à ce que les objectifs de niveau de service fixés par la première requête de service d'acheminement soient respectés, le premier flux de données est acheminé jusqu'au deuxième terminal 84 sans perte de qualité de service.

Grâce à l'invention décrite ci-dessus, il est ainsi possible d'acheminer un flux de données à travers un réseau composé d'une pluralité d'acteurs en maintenant une qualité de service de bout en bout et en optimisant l'utilisation des ressources de ce réseau.

### EXEMPLE 1

Un premier exemple de mise en œuvre du procédé 100 va maintenant être décrit, en référence aux Figures 1 et 2. Dans ce premier exemple, un flux vidéo émis par la première application fonctionnant sur le premier terminal 82 doit être acheminé par le réseau 10 depuis le premier terminal 82 jusqu'au deuxième terminal 84, alors que le routeur satellite 16C est sous la pluie.

L'orchestrateur 80 détecte tout d'abord l'émission du flux vidéo par la première application lors de l'étape 210. Il recherche alors les domaines de routages qui sont directement atteignables par le premier terminal 82, et détecte le seul domaine 56A ; ce domaine 56A est ainsi désigné domaine d'entrée 86 par l'orchestrateur 80 lors de l'étape 240.

Ensuite, l'orchestrateur de service 80 recherche les unités fonctionnelles du domaine d'entrée 86 qui sont directement atteignable par le premier terminal 82, et identifie les unités fonctionnelle de routage 26 des serveurs câblés 12A et 12B. La cartographie capacitaire du domaine 56A indiquant que les capacités courante et future du domaine 56A à acheminer un flux de données entre l'unité fonctionnelle 26 du serveur 12A et le deuxième terminal 84 sont meilleures que les capacités courante et future du domaine 56A à acheminer un flux de données entre l'unité fonctionnelle 26 du serveur 12B et le deuxième terminal 84, l'orchestrateur de service 80 attribue à l'unité fonctionnelle 26 du serveur 12A le rôle d'unité fonctionnelle d'entrée 89 lors de l'étape 250.

Puis le gestionnaire de domaine 66A du domaine 56A est informé lors de l'étape 262 que l'unité fonctionnelle 26 du serveur 12A a été sélectionnée comme unité fonctionnelle d'entrée 89, et reçoit la première requête de service d'acheminement émise par l'orchestrateur de service 80 lors de l'étape 255.

Ayant déterminé lors de l'étape 264 que le deuxième terminal 84 n'était pas directement atteignable par le domaine 56A, le gestionnaire 66A recherche un domaine voisin dont la cartographie capacitaire indique que ce domaine est en mesure d'acheminer le flux vidéo jusqu'au deuxième terminal 84 tout en respectant les objectifs de niveau de service fixés par la première requête de service d'acheminement. Ayant déterminé lors de l'étape 266 que le domaine 56B satisfait ces critères, le gestionnaire 66A recherche les unités fonctionnelles 26 du domaine 56B qui sont directement atteignables par le domaine 56A, c'est-à-dire les unités fonctionnelles 26 du domaine 56B qui sont raccordées via des liens horizontaux 46 à des unités fonctionnelles du domaine 56A ; ces unités fonctionnelles 26 sont au nombre de deux, ce sont celles des routeurs satellites 16C et 16D. L'unité fonctionnelle 26 du routeur satellite 16D est, d'après la cartographie capacitaire du domaine 56B, celle qui est la mieux à même d'acheminer le flux vidéo jusqu'au deuxième terminal 84 tout en respectant les objectifs de niveau de service fixés par la première requête de service d'acheminement ; le gestionnaire 66A sélectionne donc lors de l'étape 268 cette unité fonctionnelle 26 comme point entrant 95 de la route principale 90 dans le domaine 56B et point de destination 97 de la route principale 90 à atteindre depuis le domaine 56A.

Le gestionnaire 66A détermine ensuite au cours de l'étape 269 une promesse de niveau de service respectant les premiers objectifs de niveau de service pour l'acheminement du flux de données depuis le point entrant 95 jusqu'au point de destination 97, puis calcule un tronçon de route pour l'acheminement du flux vidéo jusqu'à l'unité fonctionnelle 26 du routeur satellite 16D. Au cours de ce calcul, le gestionnaire 66A détecte, lors de l'étape 276, que le lien entre l'unité fonctionnelle 26 du routeur satellite 16B par laquelle transite le tronçon de route et l'unité fonctionnelle 26 du routeur satellite 16D utilise les ressources d'un domaine 58A de la couche inférieure 38. Le gestionnaire 66A contacte du coup le gestionnaire 68A du domaine 58A et lui transmet lors de l'étape 280 une requête de service support avec des objectifs de niveau de services support respectant la promesse de niveau de service et exprimés dans le langage prédéterminé. Cette requête de service support spécifie qu'une route support respectant lesdits objectifs de niveau de services support doit être construite jusqu'au routeur satellite 16D.

Le routeur satellite 16D étant sous la pluie, il est toutefois impossible au gestionnaire 68A de calculer jusqu'au routeur satellite 16D une route support respectant les objectifs de niveau de services support. Le gestionnaire 68A en informe le gestionnaire 66A, qui en réponse sélectionne l'unité fonctionnelle 26 du routeur satellite 16C comme nouveau point entrant 95 de la route principale 90 dans le domaine 56B et nouveau point de destination 97 de la route principale 90 à atteindre depuis le domaine 56A, cette unité fonctionnelle 26 étant, d'après la cartographie capacitaire du domaine 56B, elle aussi capable d'acheminer le flux vidéo jusqu'au deuxième terminal 84 tout en respectant les premiers objectifs de niveau de service.

Le gestionnaire 66A calcule en conséquence un nouveau tronçon de route pour l'acheminement du flux vidéo jusqu'à l'unité fonctionnelle 26 du routeur satellite 16C. A nouveau, le gestionnaire 66A détecte que le lien entre l'unité fonctionnelle 26 du routeur satellite 16B par laquelle transite le tronçon de route et l'unité fonctionnelle 26 du routeur satellite 16C utilise les ressources du domaine 58A de la couche inférieure 38. Le gestionnaire 66A contacte du coup le gestionnaire 68A du domaine 58A et lui transmet lors de l'étape 280 une nouvelle requête de service support avec des premiers objectifs de niveau de services support respectant la promesse de niveau de service du domaine 56A et exprimés dans le langage prédéterminé. Cette requête de service support spécifie qu'une route support respectant lesdits objectifs de niveau de service support doit être construite jusqu'au routeur satellite 16C.

Le gestionnaire 68A calcule cette fois sans problème la route de support, à la suite de quoi il alloue aux unités fonctionnelles de support 28 les ressources correspondantes et punaise la route de support sur son domaine 58A ; il en informe le gestionnaire 66A qui, en réponse, communique lors des étapes 270 et 272 au gestionnaire 66B du domaine 56B une information portant sur le point entrant 95 sélectionné dans ledit domaine 56B, et une deuxième requête de service d'acheminement incluant des deuxièmes objectifs de niveau de services, exprimés dans le langage prédéterminé et calculés de sorte que la combinaison de ces deuxièmes objectifs de niveau de services avec la promesse de niveau de service du domaine 56A respecte les premiers objectifs de niveau de services. Le gestionnaire 66A alloue également aux unités fonctionnelles 26 de son domaine 56A par lesquelles transite le tronçon de route calculé les ressources nécessaires à un acheminement du flux vidéo respectant la promesse de niveau de service, et punaise la route principale sur son domaine 56A.

A son tour, le gestionnaire 66B vérifie si le deuxième terminal 84 est atteignable directement par le domaine 56B, ce qui est ici le cas. En conséquence, le gestionnaire 66B choisit le deuxième terminal 84 comme point de destination 97 de la route 90 à sa sortie du domaine 56B, détermine une promesse de niveau de service respectant les deuxièmes objectifs de niveau de service pour l'acheminement du flux de données depuis le point entrant 95 jusqu'au point de destination 97, puis calcule directement un tronçon de route depuis l'unité fonctionnelle 26 du routeur satellite 16D jusqu'au deuxième terminal 84.

Au cours de ce calcul, le gestionnaire 66B détecte que le lien entre l'unité fonctionnelle 26 d'un routeur sans fil 20 par laquelle transite le tronçon de route et l'unité fonctionnelle 26 du serveur sans fil 22 auquel est connecté le terminal 84 utilise les ressources d'un domaine 58C de la couche inférieure 38. Le gestionnaire 66B contacte du coup le gestionnaire 68C du domaine 58C et lui transmet une deuxième requête de service support avec des deuxièmes objectifs de niveau de services support respectant la promesse de niveau de service du domaine 56B et exprimés dans le langage prédéterminé. Cette deuxième requête de service support spécifie qu'une route support respectant lesdits objectifs de niveau de service support doit être construite jusqu'au serveur sans fil 22.

Le gestionnaire 68B calcule ensuite cette route de support, alloue aux unités fonctionnelles de support les ressources correspondantes punaise la route de support, et en informe le gestionnaire 66B, qui alloue à son tour aux unités fonctionnelles 26 de son domaine 56B par lesquelles transite le tronçon de route calculé les ressources nécessaires à un acheminement du flux vidéo respectant la promesse de niveau de service du domaine 56B. Enfin, le gestionnaire 66B punaise la route principale sur son domaine 56B.

La route allant du premier terminal 82 au deuxième terminal 84 est ainsi intégralement construite. Les ressources allouées sont alors engagées par les différentes unités fonctionnelles 26, 28 impliquées, de sorte que le réseau 10 soit prêt à démarrer l'acheminement du flux vidéo.

### EXEMPLE 2

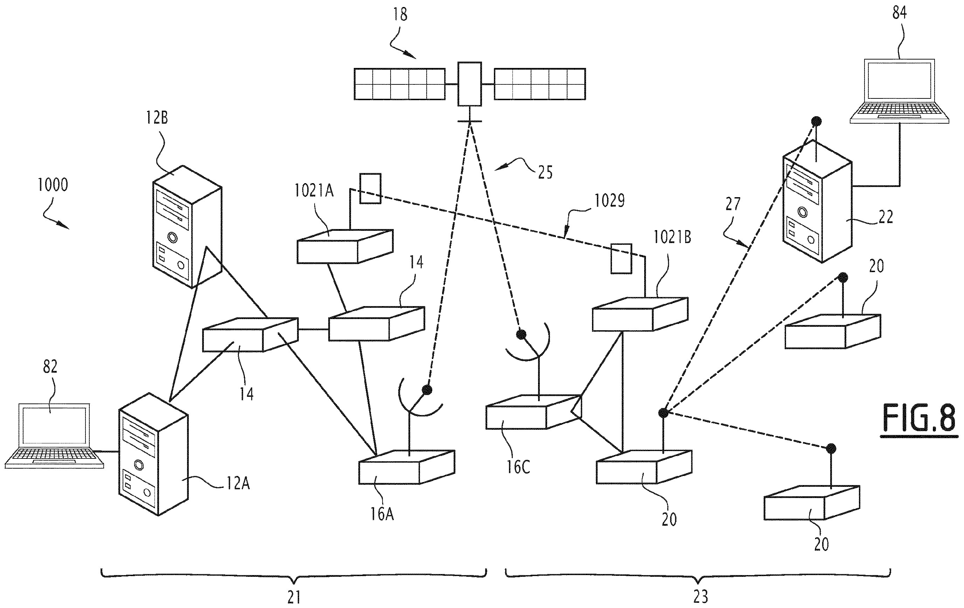

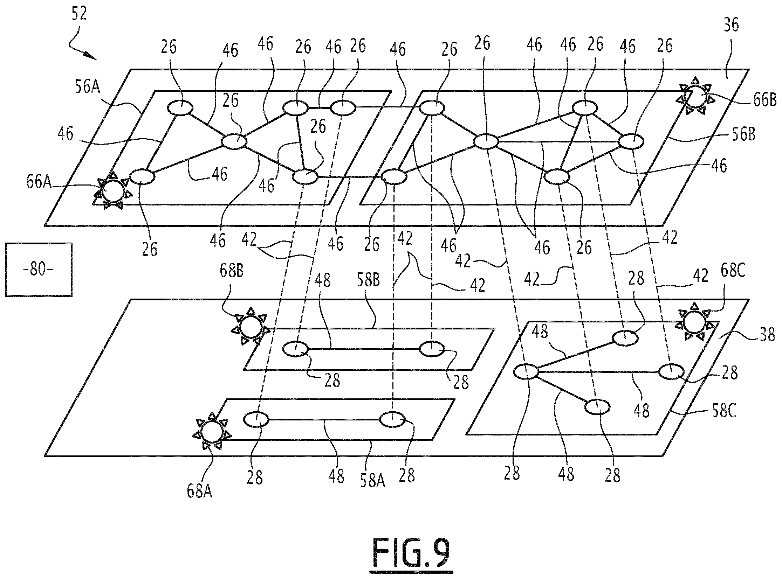

Un deuxième exemple de mise en œuvre du procédé 100 va maintenant être décrit, en référence aux Figures 8 et 9.

Sur ces Figures 8 et 9 est présenté un réseau de communication 1000 semblable au réseau de communication 10 décrit précédemment. Les éléments semblables des réseaux 10 et 1000 sont ainsi désignés par les mêmes signes de référence sur les Figures 1, 2, 8 et 9. Pour des raisons de simplification, seules les couches routage 36 et forme d'onde 38 de ce réseau 1000 ont été représentées sur la Figure 9.

Le réseau de communication 1000 se distingue du réseau 10 principalement par les caractéristiques décrites ci-dessous.

Tout d'abord, outre des serveurs d'accès 12A, 12B, 22, des routeurs câblés 14, des routeurs satellite 16A, 16C, un satellite 18 et des routeurs sans fil 20, le réseau 1000 comprend des routeurs sans fil longue portée 1021A, 1021B, constitués typiquement par des routeurs implémentant la technologie évolution de long terme (mieux connue sous l'acronyme LTE pour « Long Term Evolution »). Un premier de ces routeurs sans fil longue portée 1021A est intégré à l'infrastructure fixe 21, alors qu'un deuxième de ces routeurs sans fil longue portée 1021B est intégré à l'infrastructure mobile 23. Ces routeurs 1021A, 1021B forment ensemble une infrastructure sans fil longue portée 1029. Ils comprennent chacun une unité fonctionnelle de routage 26 et une unité fonctionnelle de forme d'onde 28.

Ensuite, l'infrastructure mobile 23 est, dans ce deuxième exemple, embarquée à bord d'un convoi de véhicules (non représenté). Chaque véhicule du convoi embarque au moins le serveur sans fil 22 ou un des routeurs sans fil 20. L'un de ces véhicules embarque par ailleurs, outre un routeur sans fil 20, le deuxième routeur sans fil longue portée 1021B et le routeur satellite 16C.

Par ailleurs, les premier et deuxième domaines de forme d'onde 58A, 58B sont différents de ceux du premier exemple. Si chacun comprend toujours deux unités fonctionnelles de forme d'onde 28, l'une est connectée, via un lien vertical 42, à une unité fonctionnelle de routage 26 appartenant au premier domaine de routage 56A, pendant que l'autre est connectée, via un lien vertical 42, à une unité fonctionnelle de routage 26 appartenant au deuxième domaine de routage 56B.

En particulier, les unités fonctionnelles de forme d'onde 28 appartenant au premier domaine de forme d'onde 58A et les unités fonctionnelles de routage 26 qui leur sont connectées appartiennent aux routeurs satellite 16A, 16C. Quant aux unités fonctionnelles de forme d'onde 28 appartenant au deuxième domaine de forme d'onde 58B et aux unités fonctionnelles de routage 26 qui leur sont connectées, elles appartiennent aux routeurs sans fil longue portée 1021A, 1021B.

On notera que, bien que les routeurs sans fil 1021A, 1021B soient à longue portée, une communication entre ces routeurs sans fil 1021A, 1021B ne peut être établie que lorsque ces routeurs 1021A, 1021 B sont relativement proches, alors que la distance entre les routeurs satellite 16A, 16C est sans influence sur la possibilité d'établir une connexion entre ces routeurs 16A, 16C. En d'autres termes, l'existence des liens 46, 48 reliant entre elles les unités fonctionnelles 26, 28 incluses dans les routeurs sans fil longue portée 1021A, 1021 B est dépendante de la distance entre ces routeurs 1021A, 1021B, alors que l'existence des liens 46, 48 reliant entre elles les unités fonctionnelles 26, 28 incluses dans les routeurs satellite 16A, 16C est indépendante de la distance entre ces routeurs 16A, 16C. Le convoi étant amené à se déplacer sur de grandes de distances, les distances entre les routeurs sans fil 1021A, 1021B d'une part et entre les routeurs satellite 16A, 16C varient fortement ; les liens 46, 48 reliant entre elles les unités fonctionnelles 26, 28 incluses dans les routeurs sans fil longue portée 1021A, 1021B sont donc beaucoup plus intermittents que les liens 46, 48 reliant entre elles les unités fonctionnelles 26, 28 incluses dans les routeurs satellite 16A, 16C, ces derniers liens 46, 48 pouvant, par comparaison, être considérés comme permanents.

Dans ce deuxième exemple, un flux de données émis par la première application fonctionnant sur le premier terminal 82 doit être acheminé par le réseau 1000 depuis le premier terminal 82 jusqu'au deuxième terminal 84, alors que, au début de cette émission, le convoi est hors de portée du routeur sans fil 1021A.

L'orchestrateur 80 détecte tout d'abord l'émission du flux de données par la première application lors de l'étape 210. Il recherche alors les domaines de routages qui sont directement atteignables par le premier terminal 82, et détecte le seul domaine 56A ; ce domaine 56A est ainsi désigné domaine d'entrée 86 par l'orchestrateur 80 lors de l'étape 240.

Ensuite, l'orchestrateur de service 80 recherche les unités fonctionnelles du domaine d'entrée 86 qui sont directement atteignable par le premier terminal 82, et identifie la seule unité fonctionnelle de routage 26 du serveur câblé 12A. L'orchestrateur de service 80 attribue donc à l'unité fonctionnelle 26 du serveur 12A le rôle d'unité fonctionnelle d'entrée 89 lors de l'étape 250.

Puis le gestionnaire de domaine 66A du domaine 56A est informé lors de l'étape 262 que l'unité fonctionnelle 26 du serveur 12A a été sélectionnée comme unité fonctionnelle d'entrée 89, et reçoit la première requête de service d'acheminement émise par l'orchestrateur de service lors de l'étape 255.

Ayant déterminé lors de l'étape 264 que le deuxième terminal 84 n'était pas directement atteignable par le domaine 56A, le gestionnaire 66A recherche un domaine voisin dont la cartographie capacitaire indique que ce domaine est en mesure d'acheminer le flux de données jusqu'au deuxième terminal 84 tout en respectant les premiers objectifs de niveau de service fixés par la première requête de service d'acheminement.

Ayant déterminé lors de l'étape 266 que le domaine 56B satisfait ces critères, le gestionnaire 66A recherche les unités fonctionnelles 26 du domaine 56B qui sont directement atteignables par le domaine 56A. Le convoi étant hors de portée du routeur sans fil 1021A, seule l'unité fonctionnelle 26 du routeur satellite 16C répond à ce critère ; le gestionnaire 66A sélectionne donc lors de l'étape 268 cette unité fonctionnelle 26 comme point entrant 95 de la route principale 90 dans le domaine 56B et point de destination 97 de la route principale 90 à atteindre depuis le domaine 56A.

Le gestionnaire 66A détermine ensuite au cours de l'étape 269 une promesse de niveau de service respectant les premiers objectifs de niveau de service pour l'acheminement du flux de données depuis le point entrant 95 jusqu'au point de destination 97, puis calcule un tronçon de route pour l'acheminement du flux de données jusqu'à l'unité fonctionnelle 26 du routeur satellite 16C. Au cours de ce calcul, le gestionnaire 66A détecte, lors de l'étape 276, que le lien entre l'unité fonctionnelle 26 du routeur satellite 16B par laquelle transite le tronçon de route et l'unité fonctionnelle 26 du routeur satellite 16C utilise les ressources d'un domaine 58A de la couche inférieure 38. Le gestionnaire 66A contacte du coup le gestionnaire 68A du domaine 58A et lui transmet lors de l'étape 280 une requête de service support avec des objectifs de niveau de services support respectant la promesse de niveau de service et exprimés dans le langage prédéterminé. Cette requête de service support spécifie qu'une route support respectant lesdits objectifs de niveau de service support doit être construite jusqu'au routeur satellite 16C.

Le gestionnaire 68A calcule alors la route de support, à la suite de quoi il alloue aux unités fonctionnelles de support 28 les ressources correspondantes et punaise la route de support sur son domaine 58A ; il en informe le gestionnaire 66A qui, en réponse, communique lors des étapes 270 et 272 au gestionnaire 66B du domaine 56B une deuxième requête de service d'acheminement, ladite requête incluant une information portant sur le point entrant 95 sélectionné dans ledit domaine 56B, et des deuxièmes objectifs de niveau de services, exprimés dans le langage prédéterminé et calculés de sorte que la combinaison de ces deuxièmes objectifs de niveau de services avec la promesse de niveau de service du domaine 56A respecte les premiers objectifs de niveau de services. Le gestionnaire 66A alloue également aux unités fonctionnelles 26 de son domaine 56A par lesquelles transite le tronçon de route calculé les ressources nécessaires à un acheminement du flux de données respectant la promesse de niveau de service, et punaise la route principale sur son domaine 56A.

A son tour, le gestionnaire 66B vérifie si le deuxième terminal 84 est atteignable directement par le domaine 56B, ce qui est ici le cas. En conséquence, le gestionnaire 66B choisit le deuxième terminal 84 comme point de destination 97 de la route 90 à sa sortie du domaine 56B, détermine une promesse de niveau de service respectant les deuxièmes objectifs de niveau de service pour l'acheminement du flux de données depuis le point entrant 95 jusqu'au point de destination 97, puis calcule directement un tronçon de route depuis l'unité fonctionnelle 26 du routeur satellite 16C jusqu'au deuxième terminal 84.

Au cours de ce calcul, le gestionnaire 66B détecte que le lien entre l'unité fonctionnelle 26 d'un routeur sans fil 20 par laquelle transite le tronçon de route et l'unité fonctionnelle 26 du serveur sans fil 22 auquel est connecté le terminal 84 utilise les ressources d'un domaine 58C de la couche inférieure 38. Le gestionnaire 66B contacte du coup le gestionnaire 68C du domaine 58C et lui transmet une deuxième requête de service support avec des deuxièmes objectifs de niveau de services support respectant la promesse de niveau de service du domaine 56B et exprimés dans le langage prédéterminé. Cette deuxième requête de service support spécifie qu'une route support respectant lesdits objectifs de niveau de service support doit être construite jusqu'au serveur sans fil 22.

Le gestionnaire 68B calcule ensuite cette route de support, alloue aux unités fonctionnelles de support les ressources correspondantes, punaise la route de support sur son domaine 58B, et en informe le gestionnaire 66B, qui alloue à son tour aux unités fonctionnelles 26 de son domaine 56B par lesquelles transite le tronçon de route calculé les ressources nécessaires à un acheminement du flux de données respectant la promesse de niveau de service du domaine 56B. Enfin, le gestionnaire 66B punaise la route principale sur son domaine 56B.

La route allant du premier terminal 82 au deuxième terminal 84 est ainsi intégralement construite. Les ressources allouées sont alors engagées par les différentes unités fonctionnelles 26, 28 impliquées, de sorte que le réseau 1000 soit prêt à démarrer l'acheminement du flux de données.

Au cours de l'acheminement du flux de données, le convoi entre dans la zone de couverture du routeur sans fil 1021A. Cet événement provoque lors de la répétition de l'étape 120 la mise en relation des unités fonctionnelles 26, 28 incluses dans les routeurs 1021A, 1021B à travers de nouveaux liens 46, 48 qui apparaissent alors sur le graphe de réseau 52.

Cette information est remontée aux gestionnaires de domaine 66A, 66B, 68B lors de l'étape 130, et les gestionnaires de bordure 66A, 66B découvrent au cours de l'étape 140, à partir des informations collectées auprès des unités fonctionnelles 26 incluses dans les routeurs 1021A, 1021B, que le lien horizontal 46 reliant ces unités fonctionnelles 26 utilise les ressources du domaine inférieur 58B.

Dans le même temps, le gestionnaire de sous-réseau à ressources mutualisées 68B détermine lors de l'étape 150 une cartographie capacitaire de son domaine 58B. Il partage ensuite cette cartographie avec les gestionnaires de domaine 66A, 66B des domaines de routage 56A, 56B lors de l'étape 160, lesquels utilisent cette cartographie pour actualiser la cartographie capacitaire de leur propre domaine 56A, 56B lors de l'étape 170.

Le gestionnaire 66A du domaine 56A est alors en possession d'une cartographie capacitaire actualisée de son domaine 56A lui indiquant que le domaine 56B ne dispose plus seulement d'une seule unité fonctionnelle 26 qui soit directement atteignable par le domaine 56A, mais également d'une deuxième unité fonctionnelle 26 satisfaisant à ce critère, à savoir l'unité fonctionnelle 26 du routeur 1021B. La cartographie capacitaire du domaine 56A indique en outre qu'une route transitant par l'unité fonctionnelle 26 du routeur sans fil 1021B est plus apte à acheminer le flux de données jusqu'au deuxième terminal 84 tout en respectant les premiers objectifs de niveau de service fixés par la première requête de service d'acheminement qu'une route transitant par l'unité fonctionnelle 26 du routeur satellite 16C. Le gestionnaire 66A modifie donc la sélection du point entrant 95 de la route principale 90 dans le domaine 56B, et sélectionne l'unité fonctionnelle 26 du routeur sans fil 1021B comme point entrant 95 de la route principale 90 dans le domaine 56B et point de destination 97 de la route principale 90 à atteindre depuis le domaine 56A.

Le gestionnaire 66A actualise alors sa promesse de niveau de service et recalcule le tronçon de route transitant par le domaine 56A de manière à prendre en compte le nouveau point de destination 97 choisi. Au cours de ce calcul, le gestionnaire 66A détecte que le lien entre l'unité fonctionnelle 26 du routeur sans fil 1021A par laquelle transite le tronçon de route et l'unité fonctionnelle 26 du routeur sans fil 1021B utilise les ressources du domaine 58B appartenant à la couche inférieure 38. Le gestionnaire 66A contacte du coup le gestionnaire 68B du domaine 58B et lui transmet lors de l'étape 280 une requête de service support spécifiant qu'une route support doit être construite jusqu'au routeur sans fil 1021B.

Le gestionnaire 68B calcule alors la route de support, à la suite de quoi il alloue aux unités fonctionnelles de support 28 les ressources correspondantes et punaise la route de support sur son domaine 58B ; il en informe le gestionnaire 66A qui, en réponse, communique au gestionnaire 66B du domaine 56B une nouvelle deuxième requête de service d'acheminement et une information portant sur le point entrant 95 sélectionné dans ledit domaine 56B. Le gestionnaire 66A alloue également aux unités fonctionnelles 26 de son domaine 56A par lesquelles transite le tronçon de route calculé les ressources nécessaires à un acheminement du flux de données respectant la promesse de niveau de service, et punaise la route principale sur son domaine 56A.

A son tour, le gestionnaire 66B actualise sa promesse de niveau de service et recalcule le tronçon de route transitant par le domaine 56B de manière à prendre en compte le nouveau point entrant 95 choisi. Ce nouveau calcul de route n'affectant pas l'utilisation des ressources du domaine 58C, le gestionnaire 68C dudit domaine 58C n'est pas contacté, et le gestionnaire 66B alloue directement aux unités fonctionnelles 26 de son domaine 56B par lesquelles transite le tronçon de route calculé les ressources nécessaires à un acheminement du flux de données respectant la promesse de niveau de service du domaine 56B. Enfin, le gestionnaire 66B punaise la route principale sur son domaine 56B.

La nouvelle route allant du premier terminal 82 au deuxième terminal 84 est ainsi intégralement construite. Les ressources allouées sont alors engagées par les différentes unités fonctionnelles 26, 28 impliquées, de sorte que le flux de données soit par la suite acheminé via la nouvelle route.

La description donnée ci-dessus permet ainsi d'appréhender les avantages apportés par l'invention. On rappelle néanmoins que cette description est donnée uniquement à titre d'exemple, l'étendue de la protection étant définie par les revendications. Si des signes de référence sont ajoutés à la suite des caractéristiques techniques mentionnées dans une revendication, c'est dans le seul but de faciliter la compréhension des revendications, et cela ne saurait être interprété comme limitant l'étendue de la protection.

## Revendications

1. Procédé (100) de préparation d'un réseau de communication distribué (10) à l'acheminement d'un flux de données à travers ledit réseau de communication distribué (10), **caractérisé en ce que** le procédé (100) comprend les étapes suivantes :
- fourniture (110) du réseau de communication distribué, le réseau de communication distribué utilisant un graphe de réseau de communication formé par une pluralité d'unités fonctionnelles (24, 26, 28, 30) interconnectées par des liens de communication (42, 44, 46, 48, 50) permanents ou intermittents, chaque unité fonctionnelle (24, 26, 28, 30) utilisant des ressources pour assurer l'acheminement d'un flux de données depuis ladite unité fonctionnelle (24, 26, 28, 30) vers une autre unité fonctionnelle (24, 26, 28, 30) à laquelle elle est connectée via un lien (42, 44, 46, 48, 50),
∘ lesdites unités fonctionnelles (24, 26, 28, 30) étant réparties en au moins deux couches (34, 36, 38, 40) telles que les unités fonctionnelles (24, 26, 28, 30) de chaque couche (34, 36, 38, 40) communiquent entre elles en gérant des ressources de communication de même nature et les unités fonctionnelles (24, 26, 28, 30) de couches différentes gèrent des ressources de communication de natures différentes,
∘ au moins deux desdites couches (34, 36, 38, 40) comprenant chacune au moins un domaine (54, 56A, 56B, 58A, 58B, 58C, 60A, 60B) regroupant une pluralité d'unités fonctionnelles (24, 26, 28, 30) de la couche (34, 36, 38, 40), le ou chaque domaine (54, 56A, 56B, 58A, 58B, 58C, 60A, 60B) comprenant un gestionnaire de domaine (64, 66A, 66B, 68A, 68B, 68C, 70A, 70B) collectant des informations de contrôle des unités fonctionnelles (24, 26, 28, 30) du domaine (54, 56A, 56B, 58A, 58B, 58C, 60A, 60B) et allouant ou fixant des règles d'utilisation de ressources aux unités fonctionnelles (24, 26, 28, 30) du domaine (54, 56A, 56B, 58A, 58B, 58C, 60A, 60B),
∘ les liens de communication comprenant des liens horizontaux (44, 46, 48, 50) connectant entre elles des unités fonctionnelles (24, 26, 28, 30) appartenant à une même couche (34, 36, 38, 40) et des liens verticaux (42) connectant entre elles des unités fonctionnelles (24, 26, 28, 30) appartenant à des couches (34, 36, 38, 40) différentes,
∘ les couches (34, 36, 38, 40) comprenant une couche principale (36) et au moins une couche inférieure (38, 40) telles que les ressources gérées par les unités fonctionnelles inférieures (28, 30) de la ou chaque couche inférieure (38, 40) servent de support aux ressources gérées par les unités fonctionnelles principales (26) de la couche principale (36), et
∘ les domaines (54, 56A, 56B, 58A, 58B, 58C, 60A, 60B) comprenant un domaine principal (56A) appartenant à la couche principale (36), et au moins un premier domaine support (58A) appartenant à une couche inférieure (38) et comprenant au moins une unité fonctionnelle (28) raccordée via un lien vertical (42) à une unité fonctionnelle principale (26) du domaine principal (56A),
- détermination (150), par le gestionnaire de domaine (64, 66A, 66B, 68A, 68B, 68C, 70A, 70B) de chaque domaine (54, 56A, 56B, 58A, 58B, 58C, 60A, 60B), à partir de la collecte d'informations de contrôle et de l'allocation de ressources réalisées par le gestionnaire de domaine (64, 66A, 66B, 68A, 68B, 68C, 70A, 70B), d'une cartographie capacitaire du domaine (54, 56A, 56B, 58A, 58B, 58C, 60A, 60B), ladite cartographie comprenant, pour au moins un couple formé par un point d'entrée dans le domaine (54, 56A, 56B, 58A, 58B, 58C, 60A, 60B) et un point cible, une mesure des capacités courante et future du domaine (54, 56A, 56B, 58A, 58B, 58C, 60A, 60B) à acheminer un flux de données entre le point d'entrée et le point cible, le point d'entrée étant constitué par une unité fonctionnelle (24, 26, 28, 30) du domaine (54, 56A, 56B, 58A, 58B, 58C, 60A, 60B) et le point cible par une unité fonctionnelle (24, 26, 28, 30) appartenant à la même couche (34, 36, 38, 40) que le domaine (54, 56A, 56B, 58A, 58B, 58C, 60A, 60B),
- découverte (140), par le gestionnaire de domaine (66A) du domaine principal (56A), du ou de chaque premier domaine support (58A),
- partage (160), par le gestionnaire de domaine (68A) du ou de chaque premier domaine support (58A), de la cartographie capacitaire dudit premier domaine support (58A) avec le gestionnaire de domaine du domaine principal (56A), et
actualisation (170), par le gestionnaire de domaine (66A) du domaine principal (56A), de la cartographie capacitaire dudit domaine principal (56A) en fonction de la ou chaque cartographie capacitaire de domaine support (58A) partagée avec le gestionnaire de domaine (66A) du domaine principal (56A).

2. Procédé de préparation (100) selon la revendication 1, dans lequel la pluralité d'unités fonctionnelles (24, 26, 28, 30) comporte une unité fonctionnelle de forme d'onde (28). dans lequel l'unité fonctionnelle de forme d'onde (28) est propre à gérer au moins une ressource parmi : créneaux de trame TDMA, codes CDMA, règles FDMA, modulations FSK, PSK, ASK, et codages d'information binaire en symbole de modulation.

3. Procédé de préparation (100) selon la revendication 1 ou 2, dans lequel la pluralité d'unités fonctionnelles (24, 26, 28, 30) comporte une unité fonctionnelle de couverture (30) propre à gérer au moins une partie des ressources suivantes : paramètres de pointage d'antenne, fréquences radio et puissances d'émission, les ressources étant composées d'équipements radio fréquence choisi parmi un amplificateur à faible bruit, un circulateur, une matrice de commutations radiofréquences et des unités de contrôle d'antenne.

4. Procédé de préparation (100) selon l'une quelconque des revendications 1 à 3, les unités fonctionnelles (24, 26, 28, 30) comporte des unités fonctionnelles applicatives (24) appartenant toutes à une couche applicative (34), des unités fonctionnelles de routage (26) appartenant toutes à une couche de routage (36), des unités fonctionnelles de forme d'onde (28) appartenant toutes à une couche de forme d'onde (38) et des unités fonctionnelles de couverture (30) appartenant toutes à une couche de couverture (40).

5. Procédé de préparation (100) selon la revendication 1 à 4, dans lequel les couches (34, 36, 38, 40) comprennent une couche supérieure (34) telle que les ressources gérées par les unités fonctionnelles principales (26) de la couche principale (36) servent de support aux ressources gérées par les unités fonctionnelles supérieures (24) de la couche supérieure (34), les domaines (54, 56A, 56B, 58A, 58B, 58C, 60A, 60B) comprennent au moins un domaine supérieur (54) appartenant à la couche supérieure (34) et comprenant au moins une unité fonctionnelle (24) raccordée via un lien vertical (42) à une unité fonctionnelle principale (26) du domaine principal (56A), le procédé de préparation (100) comprenant une étape (180) de partage, par le gestionnaire de domaine (66A) du domaine principal (56A), de la cartographie capacitaire actualisée dudit domaine principal (56A) avec le gestionnaire de domaine (64) du domaine supérieur (54).

6. Procédé de préparation (100) selon la revendication 5, dans lequel les domaines (54, 56A, 56B, 58A, 58B, 58C, 60A, 60B) comprennent au moins un domaine voisin (56B) comprenant au moins une unité fonctionnelle (26) raccordée via un lien horizontal (46) à une unité fonctionnelle principale du domaine principal (56A), et le procédé de préparation (100) comprend une étape (185) de partage, par le gestionnaire de domaine (66A) du domaine principal (56A), de la cartographie capacitaire actualisée dudit domaine principal (56A) avec le gestionnaire de domaine (66B) du ou de chaque domaine voisin (56B).

7. Procédé de préparation (100) selon l'une quelconque des revendications 1 à 6, comprenant les étapes supplémentaires suivantes :
- émission (255), par une entité émettrice, d'une première requête de service d'acheminement pour l'acheminement d'un flux de données depuis une unité fonctionnelle d'entrée (89) appartenant à la couche principale (36) du réseau de communication (10) jusqu'à une unité fonctionnelle de sortie (91) appartenant à ladite couche principale (36), ladite première requête de service d'acheminement fixant des premiers objectifs de niveau de services, exprimés dans un langage prédéterminé, pour l'acheminement du flux de données,
- calcul (260) d'une route principale (90) reliant l'unité fonctionnelle d'entrée (89) à l'unité fonctionnelle de sortie (91) et respectant les objectifs de niveau de service fixés, ladite route principale (90) étant formée par un lien horizontal (46) ou une suite de liens horizontaux (46) reliant entre elles des unités fonctionnelles de transit (92) appartenant à au moins un domaine traversé (93A, 93B) parmi le ou les domaines (56A, 56B) de la couche principale (36), ledit calcul (260) comprenant, pour le ou chaque domaine traversé (93A, 93B), les sous-étapes suivantes :
∘ information (262) du gestionnaire de domaine (66A, 66B) du domaine traversé (93A, 93B) qu'une unité fonctionnelle (26) du domaine traversé (93A, 93B) a été sélectionnée comme point entrant (95) de la route principale (90) dans ledit domaine traversé (93A, 93B),
∘ réception (263) par le gestionnaire de domaine (66A, 66B) du domaine traversé (93A, 93B) d'une requête de service d'acheminement basée sur la première requête de service d'acheminement,
∘ identification (264, 268), par le gestionnaire de domaine (66A, 66B) du domaine traversé (93A, 93B), d'un point de destination (97) par lequel faire transiter la route principale (90) à sa sortie du domaine traversé (93A, 93B), ledit point de destination (97) étant constitué par une unité fonctionnelle (26) connectée par un lien horizontal (42) à une unité fonctionnelle (26) du domaine traversé (93A, 93B),
∘ détermination, par le gestionnaire de domaine (66A, 66B) du domaine traversé (93A, 93B), d'une promesse de niveau de service respectant les premiers objectifs de niveau de service pour l'acheminement du flux de données depuis le point entrant (95) jusqu'au point de destination (97), et
∘ calcul (274), par le gestionnaire de domaine (66A, 66B) du domaine traversé (93A, 93B), au moyen de la cartographie capacitaire du domaine traversé (93A, 93B), d'un tronçon de route principale reliant le point entrant (95) au point de destination (97), ledit tronçon étant adapté pour assurer l'acheminement du flux de données de manière conforme à la promesse de niveau de service et étant formé par un lien horizontal (46) ou une suite de liens horizontaux (46) partant d'unités fonctionnelles (26) du domaine traversé (93A, 93B),
- allocation (320), à chaque unité fonctionnelle de transit (92), par le gestionnaire de domaine (66A, 66B) du domaine traversé (93A, 93B) correspondant, de ressources suffisantes pour assurer l'acheminement d'un flux de données le long de la route principale (90) en respectant les premiers objectifs de niveau de service,
- engagement (330), par chaque unité fonctionnelle de transit, des ressources allouées à l'unité fonctionnelle, et
- information (340) de l'entité émettrice de l'engagement desdites ressources.

8. Procédé de préparation (100) selon les revendications 6 et 7 prises ensemble, dans lequel les domaines traversés (93A, 93B) sont au moins au nombre de deux, l'étape (260) de calcul de la route principale (90) comprenant les sous-étapes supplémentaires suivantes :
- détermination (266), par le gestionnaire de domaine (66A) d'un premier domaine traversé (93A) constitué par le domaine principal (56A), en fonction de la cartographie capacitaire du ou de chaque domaine voisin (56B), d'un deuxième domaine traversé (93B), appartenant à la couche principale (36), par lequel faire transiter la route principale (90),
- sélection (268), par le gestionnaire de domaine (66A) du premier domaine traversé (93A), du point entrant (95) de la route principale dans le deuxième domaine traversé (93B), ledit point entrant (95) constituant pour le premier domaine traversé (93A) le point de destination (96) de la route principale (90),
- communication (270), par le gestionnaire de domaine (66A) du premier domaine traversé (93A), d'une information destinée au gestionnaire de domaine (66B) du deuxième domaine traversé (93B) portant sur le point entrant (95) sélectionné, et
- transmission (272) au gestionnaire de domaine (66B) du deuxième domaine traversé (93B), par le gestionnaire de domaine 66A) du premier domaine traversé (93A), d'une deuxième requête de service d'acheminement basée sur la première requête de service d'acheminement, ladite deuxième requête de service d'acheminement comprenant des deuxièmes objectifs de niveau de service exprimés dans le langage prédéterminé.

9. Procédé de préparation (100) selon la revendication 8, dans lequel les deuxièmes objectifs de niveau de service sont calculés de sorte que la combinaison de ces deuxièmes objectifs de niveau de service avec la promesse de niveau de service du premier domaine traversé (93A) respecte les premiers objectifs de niveau de service.

10. Procédé de préparation (100) selon la revendication 9, dans lequel la couche (48) du premier domaine support (58A) comprend au moins un domaine (58B, 58C) distinct du premier domaine support (58A), dont au moins un domaine (58B) adjacent au premier domaine support (58B) comprenant au moins une unité fonctionnelle (28) raccordée par un lien horizontal (48) à une unité fonctionnelle (28) du premier domaine support (58A), la deuxième unité fonctionnelle de support (99B) appartenant à un domaine (58B) distinct du premier domaine support (58A), et l'étape (282) de calcul de la route de support (98) comprend les sous-étapes suivantes :
- détermination (288), par le gestionnaire de domaine (68A) du premier domaine support (58A), en fonction de la cartographie capacitaire du ou de chaque domaine adjacent (58B), d'un deuxième domaine support (58B), choisi parmi le ou les domaine(s) adjacent(s) (58B), par lequel faire transiter la route de support (98),
- sélection (290), par le gestionnaire de domaine (68A) du premier domaine support (58A), d'un point d'entrée de la route de support (98) dans le deuxième domaine support (58B),
- détermination , par le gestionnaire de domaine (68A) du premier domaine support (58A), d'une promesse de niveau de service support respectant les objectifs de niveau de service support pour l'acheminement du flux de données depuis la première unité fonctionnelle de support (99A) jusqu'au point d'entrée,
- communication (292), par le gestionnaire de domaine (68A) du premier domaine support (58A), d'une information destinée au gestionnaire de domaine (68B) du deuxième domaine support (58B) portant sur le point d'entrée sélectionné,
- transmission (294) au gestionnaire de domaine (68B) du deuxième domaine support (58B), par le gestionnaire de domaine (68A) du premier domaine support (58A), d'une deuxième requête de service support basée sur la première requête de service support, ladite deuxième requête de service support comprenant des deuxièmes objectifs de niveau de service support exprimés dans le langage prédéterminé, et
- calcul (296), par le gestionnaire de domaine (68A) du premier domaine support (58A), au moyen de la cartographie capacitaire du premier domaine support (58A), d'un tronçon de route de support reliant la première unité fonctionnelle de support (99A) au point d'entrée, ledit tronçon étant adapté pour assurer l'acheminement du flux de données de manière conforme à la promesse de niveau de service support et étant formé par un lien horizontal (48) ou une suite de liens horizontaux (48) partant d'unités fonctionnelles (28) du premier domaine support (58A).

11. Procédé de préparation (100) selon l'une quelconque des revendications 8 à 10, comprenant les étapes supplémentaires suivantes :
- raccordement (190) d'un premier terminal (82) au réseau de communication (10),
- collecte (230), par un orchestrateur de service (80), de la cartographie capacitaire du ou de chaque domaine (56A) de la couche principale (36) ayant au moins une unité fonctionnelle (26) directement atteignable par le premier terminal (82),
- émission (200), par une première application fonctionnant sur le premier terminal (82), d'un flux de données à destination d'une deuxième application fonctionnant sur un deuxième terminal distant (84) raccordé à l'unité fonctionnelle de sortie (91),
- détection (210) de cette émission par l'orchestrateur de service (80),
- déclenchement (220), par l'orchestrateur de service (80), de la première requête de service d'acheminement à partir du flux de données émis et de logiques de services prédéterminées,
- désignation (240), par l'orchestrateur de service (80), en fonction de la ou chaque cartographie capacitaire collectée, d'un domaine d'entrée (86) de la couche principale (36) constitué par un domaine ayant au moins une unité fonctionnelle (26) directement atteignable par le premier terminal (82),
- attribution (250), par l'orchestrateur de service (80), en fonction de la ou chaque cartographie capacitaire collectée, à une unité fonctionnelle (26) du domaine d'entrée (86) directement atteignable par le premier terminal (82), du rôle d'unité fonctionnelle d'entrée (89), et
- transmission de la première requête de service d'acheminement au gestionnaire de domaine (66A) du domaine d'entrée (86), l'orchestrateur de service (80) constituant l'entité émettrice.

12. Procédé de préparation (100) selon l'une quelconque des revendications 1 à 11, dans lequel le gestionnaire de domaine (64, 66A, 66B, 68A, 68B, 68C, 70A, 70B) de chaque domaine (54, 56A, 56B, 58A, 58B, 58C, 60A, 60B) du réseau de communication (10) est programmé pour décoder des objectifs de niveau de services lorsqu'ils sont exprimés dans le langage prédéterminé.

13. Procédé de préparation (100) selon l'une quelconque des revendications 1 à 12, comprenant une étape (350) de surveillance, par chaque gestionnaire de domaine (66A, 66B) d'un domaine traversé (93A, 93B), du respect de l'engagement suivi, et dans le cas où le gestionnaire de domaine (66A, 66B) détecte que l'engagement ne peut plus être respecté avec l'allocation de ressources courant, d'une étape (360) de ré-allocation de ressources pour maintenir l'engagement.

14. Procédé de préparation (100) selon l'une quelconque des revendications 1 à 13, dans lequel le gestionnaire de domaine (64, 66A, 66B, 68A, 68B, 68C, 70A, 70B) de chaque domaine (54, 56A, 56B, 58A, 58B, 58C, 60A, 60B) du réseau de communication (10) est un gestionnaire distribué comprenant un ensemble d'automates informatiques coordonnés répartis entre différents équipements de communication (12A, 12B, 14, 16A, 16B, 16C, 16D, 18A, 18B, 20, 22) intégrant chacun une unité fonctionnelle (24, 26, 28, 30) du domaine (54, 56A, 56B, 58A, 58B, 58C, 60A, 60B).

15. Procédé de préparation (100) selon l'une quelconque des revendications 1 à 15, comprenant une étape (140) de découverte des gestionnaires de domaine (66B, 68A) des domaines voisin (56B), supérieur (54) et/ou support (58A) par le gestionnaire de domaine (66A) du domaine principal (56A) grâce à des échanges appliquant le protocole internet entre les unités fonctionnelles (26, 28) desdits domaines (56A, 56B, 58A) et à des règles implicites de découverte appliquées à ces échanges.

## Patentansprüche

1. Verfahren (100) zur Herstellung eines verteilten Kommunikationsnetzes (10) zur Lenkung eines Datenstroms durch das verteilte Kommunikationsnetz (10), **dadurch gekennzeichnet, dass** das Verfahren (100) die folgenden Schritte umfasst:
- Bereitstellen (110) des verteilten Kommunikationsnetzes, wobei das verteilte Kommunikationsnetz einen Graphen des verteilten Kommunikationsnetzes verwendet, der von einer Mehrzahl von Funktionseinheiten (24, 26, 28, 30) gebildet wird, die durch ständige oder intermittierende Kommunikationsverbindungen (42, 44, 46, 48, 50) miteinander verbunden sind, wobei jede Funktionseinheit (24, 26, 28, 30) Ressourcen verwendet, um die Lenkung eines Datenstroms von der Funktionseinheit (24, 26, 28, 30) zu einer anderen Funktionseinheit (24, 26, 28, 30), mit der sie über eine Verbindung (42, 44, 46, 48, 50) verbunden ist, sicherzustellen, wobei
∘ die Funktionseinheiten (24, 26, 28, 30) in mindestens zwei Schichten (34, 36, 38, 40) derart verteilt sind, dass die Funktionseinheiten (24, 26, 28, 30) jeder Schicht (34, 36, 38, 40) untereinander kommunizieren durch Leiten von Kommunikationsressourcen derselben Art und die Funktionseinheiten (24, 26, 28, 30) von unterschiedlichen Schichten Kommunikationsressourcen von unterschiedlichen Arten leiten,
∘ jede von mindestens zwei der Schichten (34, 36, 38, 40) mindestens eine Domäne (54, 56A, 56B, 58A, 58B, 58C, 60A, 60B) umfasst, die eine Mehrzahl von Funktionseinheiten (24, 26, 28, 30) der Schicht (34, 36, 38, 40) zusammenfasst, wobei die oder jede Domäne (54, 56A, 56B, 58A, 58B, 58C, 60A, 60B) einen Domänenmanager (64, 66A, 66B, 68A, 68B, 68C, 70A, 70B) umfasst, der Informationen zur Steuerung der Funktionseinheiten (24, 26, 28, 30) der Domäne (54, 56A, 56B, 58A, 58B, 58C, 60A, 60B) sammelt und Benutzungsregeln der Ressourcen den Funktionseinheiten (24, 26, 28, 30) der Domäne (54, 56A, 56B, 58A, 58B, 58C, 60A, 60B) zuteilt oder festlegt,
∘ die Kommunikationsverbindungen Horizontalverbindungen (44, 46, 48, 50), die die zu einer selben Schicht (34, 36, 38, 40) gehörenden Funktionseinheiten (24, 26, 28, 30) untereinander verbinden, und vertikale Verbindungen (42), die die zu unterschiedlichen Schichten (34, 36, 38, 40) gehörenden Funktionseinheiten (24, 26, 28, 30) untereinander verbinden, umfassen,
∘ die Schichten (34, 36, 38, 40) eine Hauptschicht (36) und mindestens eine untere Schicht (38, 40) umfassen, derart dass die von den unteren Funktionseinheiten (28, 30) der oder jeder unteren Schicht (38, 40) geleiteten Ressourcen als Unterstützung der von den Hauptfunktionseinheiten (26) der Hauptschicht (36) geleiteten Ressourcen dienen, und
∘ die Domänen (54, 56A, 56B, 58A, 58B, 58C, 60A, 60B) eine Hauptdomäne (56A), die zu der Hauptschicht (36) gehört, und mindestens eine erste Unterstützungsdomäne (58A), die zu einer unteren Schicht (38) gehört und mindestens eine Funktionseinheit (28) umfasst, die über eine vertikale Verbindung (42) an eine Hauptfunktionseinheit (26) der Hauptdomäne (56A) angeschlossen ist, umfassen,
- Bestimmen (150) einer Kapazitätskartographie der Domäne (54, 56A, 56B, 58A, 58B, 58C, 60A, 60B) durch den Domänenmanager (64, 66A, 66B, 68A, 68B, 68C, 70A, 70B) jeder Domäne (54, 56A, 56B, 58A, 58B, 58C, 60A, 60B) aus der Sammlung von Steuerungsinformationen und der Zuordnung von Ressourcen, die von dem Domänenmanager (64, 66A, 66B, 68A, 68B, 68C, 70A, 70B) realisiert sind, wobei die Kartographie für mindestens ein Paar, das von einem Eintrittspunkt in die Domäne (54, 56A, 56B, 58A, 58B, 58C, 60A, 60B) und einem Zielpunkt gebildet ist, eine Messung der laufenden und zukünftigen Kapazitäten der Domäne (54, 56A, 56B, 58A, 58B, 58C, 60A, 60B) zum Lenken eines Datenstroms zwischen dem Eingangspunkt und dem Zielpunkt umfasst, wobei der Eingangspunkt durch eine Funktionseinheit (24, 26, 28, 30) der Domäne (54, 56A, 56B, 58A, 58B, 58C, 60A, 60B) gebildet wird und der Zielpunkt durch eine Funktionseinheit (24, 26, 28, 30), die zu derselben Schicht (34, 36, 38, 40) wie die Domäne (54, 56A, 56B, 58A, 58B, 58C, 60A, 60B) gehört, gebildet wird,
- Auffinden (140) der oder jeder ersten Unterstützungsdomäne (58A) durch den Domänenmanager (66A) der Hauptdomäne (56A),
- Teilen (160) der Kapazitätskartographie der ersten Unterstützungsdomäne (58A) mit dem Domänenmanager der Hauptdomäne (56A) durch den Domänenmanager (68A) des oder jeder ersten Unterstützungsdomäne und
- Aktualisieren (170) der Kapazitätskartographie der Hauptdomäne (56A) abhängig von der oder jeder Kapazitätskartographie der Unterstützungsdomäne (58A), die mit dem Domänenmanager (66A) der Hauptdomäne (56A) geteilt wird, durch den Domänenmanager (66A) der Hauptdomäne (56A).

2. Herstellungsverfahren (100) nach Anspruch 1, bei der die Mehrzahl von Funktionseinheiten (24, 26, 28, 30) eine Wellenform-Funktionseinheit (28) aufweist, wobei die Wellenform-Funktionseinheit (28) geeignet ist, mindestens eine Ressource zu leiten, ausgewählt aus: TDMA Rahmenzeitschlitzen, CDMA Codes, FDMA Regeln, FSK-, PSK-, ASK-Modulationen und Modulationssymbol-Binärinformationscodierungen.

3. Herstellungsverfahren (100) nach Anspruch 1 oder 2, bei der die Mehrzahl von Funktionseinheiten (24, 26, 28, 30) eine Deckungsfunktionseinheit (30) aufweist, die geeignet ist, mindestens einen Teil der folgenden Ressourcen zu leiten: Parameter zur Antennenausrichtung, Funkfrequenzen und Sendeleistungen, wobei die Ressourcen aus Funkfrequenzausrüstungen zusammengesetzt sind, ausgewählt aus einem rauscharmen Verstärker, einem Zirkulator, einer Umschaltmatrix für Funkfrequenzen und Antennensteuereinheiten.

4. Herstellungsverfahren (100) nach einem beliebigen der Ansprüche 1 bis 3, bei dem die Funktionseinheiten (24, 26, 28, 30) Anwendungsfunktionseinheiten (24), die alle zu einer Anwendungsschicht (34) gehören, Routingfunktionseinheiten (26), die alle zu einer Routingschicht (36) gehören, Wellenform-Funktionseinheiten (28), die alle zu einer Wellenformschicht (38) gehören und Deckungsfunktionseinheiten (30), die alle zu einer Deckungsschicht (40) gehören, aufweisen.

5. Herstellungsverfahren (100) nach Anspruch 1 bis 4, bei dem die Schichten (34, 36, 38, 40) eine obere Schicht (34) umfassen, derart dass die von den Hauptfunktionseinheiten (26) geleiteten Ressourcen der Hauptschicht (36) als Unterstützung für die von den oberen Funktionseinheiten (24) der oberen Schicht (34) geleiteten Ressourcen dienen, wobei die Domänen (54, 56A, 56B, 58A, 58B, 58C, 60A, 60B) mindestens eine obere Domäne (54) umfassen, die zu der oberen Schicht (34) gehört und mindestens eine Funktionseinheit (24) umfasst, die über eine vertikale Verbindung (42) an eine Hauptfunktionseinheit (26) der Hauptdomäne (56A) angeschlossen ist, wobei das Herstellungsverfahren (100) einen Schritt (180) des Teilens der aktualisierten Kapazitätskartographie der Hauptdomäne (56A) mit dem Domänenmanager (64) der oberen Domäne (54) durch den Domänenmanager (66A) der Hauptdomäne (56A) umfasst.

6. Herstellungsverfahren (100) nach Anspruch 5, bei dem die Domänen (54, 56A, 56B, 58A, 58B, 58C, 60A, 60B) mindestens eine Nachbardomäne (56B) umfassen, die mindestens eine Funktionseinheit (26) umfasst, die über eine Horizontalverbindung (46) an eine Hauptfunktionseinheit der Hauptdomäne (56A) angeschlossen ist, und das Herstellungsverfahren (100) einen Schritt (185) des Teilens der aktualisierten Kapazitätskartographie der Hauptdomäne (56A) mit dem Domänenmanager (66B) der oder jeder Nachbardomäne (56B) durch den Domänenmanager (66A) der Hauptdomäne (56A) umfasst.

7. Herstellungsverfahren (100) nach einem beliebigen der Ansprüche 1 bis 6, die folgenden zusätzlichen Schritte umfassend:
- Senden (255) von einer Sendeeinheit einer ersten Lenkungsanforderung für die Lenkung eines Datenstroms von einer Eingangsfunktionseinheit (89), die zu der Hauptschicht (36) des Kommunikationsnetzes (10) gehört, zu einer Ausgangsfunktionseinheit (91), die zu der Hauptschicht (36) gehört, wobei die erste Lenkungsanforderung erste Service-Level-Ziele, die in einer vorbestimmten Sprache ausgedrückt sind, für die Lenkung des Datenstroms festgelegt,
- Berechnen (260) eines Hauptweges (90), der die Eingangsfunktionseinheit (89) mit der Ausgangsfunktionseinheit (91) verbindet und die festgelegten Service-Level-Ziele respektiert, wobei der Hauptweg (90) von einer Horizontalverbindung (46) oder einer Folge von Horizontalverbindungen (46), die Transitfunktionseinheiten (92) untereinander verbinden, die zu mindestens einer überquerten Domäne (93A, 93B) unter der oder den Domänen (56A, 56B) der Hauptschicht (36) gehören, gebildet wird, wobei das Berechnen (260) für die oder jede durchquerte Domäne (93A, 93B) die folgenden Unterschritte umfasst:
∘ Informieren (262) des Domänenmanagers (66A, 66B) der überquerten Domäne (93A, 93B), dass eine Funktionseinheit (26) der überquerten Domäne (93A, 93B) als Eingangspunkt (95) des Hauptweges (90) in der überquerten Domäne (93A, 93B) ausgewählt wurde,
∘ Empfangen (263) einer Lenkungsanforderung basierend auf der ersten Lenkungsanforderung durch den Domänenmanager (66A, 66B) der überquerten Domäne (93A, 93B),
∘ Identifizieren (264, 268) eines Zielpunktes (97), durch den der Hauptweg (90) bei seinem Austritt aus der überquerten Domäne (93A, 93B) hindurchgehen soll, durch den Domänenmanager (66A, 66B) der überquerten Domäne (93A, 93B), wobei der Zielpunkt (97) von einer Funktionseinheit (26) gebildet wird, die über eine Horizontalverbindung (42) mit einer Funktionseinheit (26) der überquerten Domäne (93A, 93B) verbunden ist,
∘ Bestimmen einer Zusage eines Service-Levels, der die ersten Service-Level-Ziele für die Lenkung des Datenstroms von dem Eingangspunkt (95) bis zum Zielpunkt (97) respektiert, durch den Domänenmanager (66A, 66B) der überquerten Domäne (93A, 93B) und
∘ Berechnen (274) eines Abschnitts des Hauptweges, der den Eingangspunkt (95) mit dem Zielpunkt (97) verbindet, durch den Domänenmanager (66A, 66B) der überquerten Domäne (93A, 93B) mittels der Kapazitätskartographie der überquerten Domäne (93A, 93B), wobei der Abschnitt angepasst ist, die Lenkung des Datenstroms in einer der Zusage des Service-Levels entsprechenden Weise sicherzustellen, und der Abschnitt von einer Horizontalverbindung (46) oder einer Folge von Horizontalverbindungen (46) ausgehend von Funktionseinheiten (26) der durchquerten Domäne (93A, 93B) gebildet wird,
- Zuordnen (320) von ausreichenden Ressourcen zu jeder Transitfunktionseinheit (92) durch den Domänenmanager (66A, 66B) der entsprechenden überquerten Domäne (93A, 93B), um die Lenkung des Datenstroms entlang des Hauptweges (90) sicherzustellen, wobei die ersten Service-Level-Ziele respektiert werden,
- Einsetzen (330) der der Funktionseinheit zugeordneten Ressourcen durch jede Transitfunktionseinheit, und
- Informieren (340) der Sendeeinheit über den Einsatz der Ressourcen.

8. Herstellungsverfahren (100) nach den Ansprüchen 6 und 7 zusammengenommen, bei dem die überquerten Domänen (93A, 93B) mindestens zwei sind, wobei der Schritt (260) des Berechnens des Hauptweges (90) die folgenden zusätzlichen Unterschritte umfasst:
- Bestimmen (266), durch den Domänenmanager (66A) einer von der Hauptdomäne gebildeten ersten überquerten Domäne (93A), einer zu der Hauptschicht (36) gehörenden zweiten überquerten Domäne (93B), durch die der Hauptweg (90) gehen soll, abhängig von der Kapazitätskartographie des oder jeder Nachbardomäne (56B),
- Auswählen (268) des Eingangspunktes (95) des Hauptweges in der zweiten überquerten Domäne (93B) durch den Domänenmanager (66A) der ersten überquerten Domäne (93A), wobei der Eingangspunkt (95) für die erste überquerten Domäne (93A) den Zielpunkt (96) des Hauptweges (90) bildet,
- Kommunizieren (270) einer für den Domänenmanager (66B) der zweiten überquerten Domäne (93B) vorgesehenen Information bezüglich des ausgewählten Eingangspunktes (95) durch den Domänenmanager (66A) der ersten überquerten Domäne (93A), und
- Übertragen (272) einer zweiten Lenkungsanforderung basierend auf der ersten Lenkungsanforderung an den Domänenmanager (66B) der zweiten überquerten Domäne (93B) durch den Domänenmanager (66A) der ersten überquerten Domäne (93A), wobei die zweite Lenkungsanforderung zweite, in der vorbestimmten Sprache ausgedrückte Service-Level-Ziele umfasst.

9. Herstellungsverfahren (100) nach Anspruch 8, bei dem die zweiten Service-Level-Ziele so berechnet werden, dass die Kombination dieser zweiten Service-Level-Ziele mit der Zusage des Service-Levels der ersten überquerten Domäne (93A) die ersten Service-Level-Ziele respektiert.

10. Herstellungsverfahren (100) nach Anspruch 9, bei der die Schicht (48) der ersten Unterstützungsdomäne (58A) mindestens eine zu der ersten Unterstützungsdomäne (58A) unterschiedliche Domäne (58B, 58C) umfasst, deren mindestens eine Domäne (58B) benachbart zur ersten Unterstützungsdomäne (58B) mindestens eine Funktionseinheit (28) umfasst, die über eine Horizontalverbindung (48) an eine Funktionseinheit (28) der ersten Unterstützungsdomäne (58A) angeschlossen ist, wobei die zweite Unterstützungsfunktionseinheit (99B) zu einer Domäne (58B) gehört, die unterschiedlich zu der ersten Unterstützungsdomäne (58A) ist, und der Schritt (282) des Berechnens des Unterstützungsweges (98) die folgenden Unterschritte umfasst:
- Bestimmen (288) durch den Domänenmanager (68A) der ersten Unterstützungsdomäne (58A) abhängig von der Kapazitätskartographie des oder jeder benachbarten Domäne (58B) einer aus der oder den benachbarten Domänen (58B) ausgewählten zweiten Unterstützungsdomäne (58B), durch die der Unterstützungsweg (98) durchgehen soll,
- Auswählen (290) eines Eingangspunktes des Unterstützungsweges (98) in der zweiten Unterstützungsdomäne (58B) durch den Domänenmanager (68A) der ersten Unterstützungsdomäne (58A),
- Bestimmen einer Zusage eines Unterstützung-Service-Levels, der die Unterstützung-Service-Level-Ziele für die Lenkung des Datenstroms von der ersten Unterstützungsfunktionseinheit (99A) bis zum Eingangspunkt respektiert, durch den Domänenmanager (68A) der ersten Unterstützungsdomäne (58A),
- Kommunizieren (292) einer Information bezüglich des ausgewählten Eingangspunktes an den Domänenmanager (66B) der zweiten Unterstützungsdomäne (58B) durch den Domänenmanager (66A) der ersten Unterstützungsdomäne (58A),
- Übertragen (294) einer zweiten Unterstützungsanforderung basierend auf der ersten Unterstützungsanforderung durch den Domänenmanager (68A) der ersten Unterstützungsdomäne (58A) an den Domänenmanager (68B) der zweiten Unterstützungsdomäne (58B), wobei die zweite Unterstützungsanforderung zweite in der vorbestimmten Sprache ausgedrückte Unterstützung-Service-Level-Ziele umfasst, und
- Berechnen (296) mittels der Kapazitätskartographie der ersten Unterstützungsdomäne (58A) eines Abschnitts des Unterstützungsweges, der die erste Unterstützungsfunktionseinheit (99 A) mit dem Eingangspunkt verbindet, durch den Domänenmanager (68A) der ersten Unterstützungsdomäne (58A), wobei der Abschnitt angepasst ist, die Lenkung des Datenstroms in einer der Zusage des Unterstützung-Service-Levels entsprechenden Weise sicherzustellen und der Abschnitt durch eine Horizontalverbindung (48) oder eine Folge von Horizontalverbindungen (48) ausgehend von Funktionseinheiten (28) der ersten Unterstützungsdomäne (58A) gebildet wird.

11. Herstellungsverfahren (100) nach einem beliebigen der Ansprüche 8 bis 10 die folgenden zusätzlichen Schritte umfassend:
- Anschließen (190) eines ersten Endgerätes (82) an das Kommunikationsnetz (10),
- Sammeln der Kapazitätskartographie des oder jeder Domäne (56A) der Hauptschicht (36), die mindestens eine direkt von dem ersten Endgerät (82) erreichbare Funktionseinheit (26) aufweist, durch einen Service-Orchestrierer (80),
- Senden (200) eines Datenstroms von einer auf dem ersten Endgerät (82) betriebenen ersten Anwendung an eine zweite Anwendung, die auf einem zweiten entfernten Endgerät (84) läuft, das an eine Ausgangsfunktionseinheit (91) angeschlossen ist,
- Detektieren (210) dieser Sendung durch den Service-Orchestrierer (80),
- Auslösen (220) der ersten Lenkungsanforderung durch den Service-Orchestrierer (80) aus dem gesendeten Datenstrom und vorbestimmten Servicelogiken,
- Bezeichnen (240) abhängig von der oder jeder gesammelten Kapazitätskartographie einer Eingangsdomäne (86) der Hauptschicht (36), die von einer Domäne gebildet wird, die mindestens eine von dem ersten Endgerät (82) direkt erreichbare Funktionseinheit (26) aufweist, durch den Service-Orchestrierer (80),
- Zuweisen (250) einer Rolle als Eingangsfunktionseinheit (89) an eine Funktionseinheit (26) der Eingangsdomäne (86), die direkt von dem ersten Endgerät (82) erreichbar ist, durch den Service-Orchestrierer (80) abhängig von der oder jeder gesammelten Kapazitätskartographie und
- Übertragen der ersten Lenkungsanforderung an den Domänenmanager (66A) der Eingangsdomäne (86), wobei der Service-Orchestrierer (80) die Sendeeinheit bildet.

12. Herstellungsverfahren (100) nach einem beliebigen der Ansprüche 1 bis 11, bei der der Domänenmanager (64, 66A, 66B, 68A, 68B, 68C, 70A, 70B) jeder Domäne (54, 56A, 56B, 58A, 58B, 58C, 60A, 60B) des Kommunikationsnetzes (10) zum Dekodieren der Service-Level-Ziele, wenn diese in der vorbestimmten Sprache ausgedrückt sind, programmiert ist.

13. Herstellungsverfahren (100) nach einem beliebigen der Ansprüche 1 bis 12, das einen Schritt (350) des Überwachens hinsichtlich des folgenden Einsatzes und in dem Fall, in dem der Domänenmanager (66A, 66B) detektiert, dass der Einsatz nicht mehr mit der aktuellen Zuordnung der Ressourcen respektiert werden kann, einen Schritt (360) der erneuten Zuordnung von Ressourcen, um den Einsatz aufrechtzuerhalten ist, durch jeden Domänenmanager (66A, 66B) einer überquerten Domäne (93A, 93B) umfasst.

14. Herstellungsverfahren (100) nach einem beliebigen der Ansprüche 1 bis 13, bei dem der Domänenmanager (64, 66A, 66B, 68A, 68B, 68C, 70A, 70B) jeder Domäne (54, 56A, 56B, 58A, 58B, 58C, 60A, 60B) des Kommunikationsnetzes (10) ein verteilter Manager ist, der einen Satz von koordinierten Automaten der Informatik umfasst, die unter unterschiedlichen Kommunikationsausrüstungen (12A, 12B, 14, 16A, 16B, 16C, 16 D, 18A, 18B, 20, 22) verteilt sind, die jeweils eine Funktionseinheit (24, 26, 28, 30) der Domäne (54, 56A, 56B, 58A, 58B, 58C, 60A, 60B) integrieren.

15. Herstellungsverfahren (100) nach einem beliebigen der Ansprüche 1 bis 15 einen Schritt (140) des Auffindens von Domänenmanagern (66B, 68A) der Nachbardomäne (56B), der oberen Domäne (54) und/oder der Unterstützungsdomäne (58A) durch den Domänenmanager (66A) der Hauptdomäne (56A) dank eines Austausches, der das Internetprotokoll zwischen den Funktionseinheiten (26, 28) der Domänen (56A, 56B, 58A) anwendet, und von impliziten Regeln des Auffindens, die auf diesen Austausch angewandt werden, umfassend.

## Claims

1. Method (100) of preparing a distributed communication network (10) for the forwarding of a data stream across said distributed communication network (10), **characterised in that** the method (100) comprises the following steps:
- provision (110) of the distributed communication network, the distributed communication network using a communication network graph formed by a plurality of functional units (24, 26, 28, 30) which are interconnected by permanent or intermittent communication links (42, 44, 46, 48, 50), each functional unit (24, 26, 28, 30) using resources to ensure the forwarding of a data stream from said functional unit (24, 26, 28, 30) to another functional unit (24, 26, 28, 30) to which it is connected *via* a link (42, 44, 46, 48, 50),
∘ said functional units (24, 26, 28, 30) being distributed in at least two layers (34, 36, 38, 40) such that the functional units (24, 26, 28, 30) of each layer (34, 36, 38, 40) communicate with one another while managing communication resources of the same nature and the functional units (24, 26, 28, 30) of different layers manage communication resources of different natures,
∘ at least two of said layers (34, 36, 38, 40) each comprising at least one domain (54, 56A, 56B, 58A, 58B, 58C, 60A, 60B) including a plurality of functional units (24, 26, 28, 30) of the layer (34, 36, 38, 40), the or each domain (54, 56A, 56B, 58A, 58B, 58C, 60A, 60B) comprising a domain manager (64, 66A, 66B, 68A, 68B, 68C, 70A, 70B) which collects control information of the functional units (24, 26, 28, 30) of the domain (54, 56A, 56B, 58A, 58B, 58C, 60A, 60B) and allocates to or establishes rules for the use of resources by the functional units (24, 26, 28, 30) of the domain (54, 56A, 56B, 58A, 58B, 58C, 60A, 60B),
∘ the communication links comprising horizontal links (44, 46, 48, 50) which connect together functional units (24, 26, 28, 30) belonging to the same layer (34, 36, 38, 40), and vertical links (42) which connect together functional units (24, 26, 28, 30) belonging to different layers (34, 36, 38, 40),
∘ the layers (34, 36, 38, 40) comprising a main layer (36) and at least one lower layer (38, 40) such that the resources managed by the lower functional units (28, 30) of the or each lower layer (38, 40) serve as support for the resources managed by the main functional units (26) of the main layer (36), and
∘ the domains (54, 56A, 56B, 58A, 58B, 58C, 60A, 60B) comprising a main domain (56A) which belongs to the main layer (36), and at least a first support domain (58A) which belongs to a lower layer (38) and comprises at least one functional unit (28) which is connected *via* a vertical link (42) to a main functional unit (26) of the main domain (56A),
- determination (150), by the domain manager (64, 66A, 66B, 68A, 68B, 68C, 70A, 70B) of each domain (54, 56A, 56B, 58A, 58B, 58C, 60A, 60B), from the collection of control information and the allocation of resources carried out by the domain manager (64, 66A, 66B, 68A, 68B, 68C, 70A, 70C), of a capacity map of the domain (54, 56A, 56B, 58A, 58B, 58C, 60A, 60B), said map comprising, for at least one pair formed by a point of entry in the domain (54, 56A, 56B, 58A, 58B, 58C, 60A, 60B) and a target point, a measurement of the current and future capacities of the domain (54, 56A, 56B, 58A, 58B, 58C, 60A, 60B) to forward a data stream between the point of entry and the target point, the point of entry being constituted by a functional unit (24, 26, 28, 30) of the domain (54, 56A, 56B, 58A, 58B, 58C, 60A, 60B) and the target point being constituted by a functional unit (24, 26, 28, 30) belonging to the same layer (34, 36, 38, 40) as the domain (54, 56A, 56B, 58A, 58B, 58C, 60A, 60B),
- discovery (140), by the domain manager (66A) of the main domain (56A), of the or each first support domain (58A),
- sharing (160), by the domain manager (68A) of the or each first support domain (58A), of the capacity map of said first support domain (58A) with the domain manager of the main domain (56A), and
- updating (170), by the domain manager (66A) of the main domain (56A), of the capacity map of said main domain (56A) as a function of the or each support domain (58A) capacity map shared with the domain manager (66A) of the main domain (56A).

2. Preparation method (100) according to claim 1, wherein the plurality of functional units (24, 26, 28, 30) comprises a waveform functional unit (28), wherein the waveform functional unit (28) is capable of managing at least one resource from among: frame slots TDMA, codes CDMA, rules FDMA, modulations FSK, PSK, ASK, and encoding of binary information as modulation symbol.

3. Preparation method (100) according to claim 1 or 2, wherein the plurality of functional units (24, 26, 28, 30) comprises a coverage functional unit (30) which is capable of managing at least some of the following resources: antenna pointing parameters, radio frequencies and transmission powers, the resources being composed of pieces of radiofrequency equipment chosen from a low-noise amplifier, a circulator, a radiofrequency switching matrix and antenna control units.

4. Preparation method (100) according to any one of claims 1 to 3, wherein the functional units (24, 26, 28, 30) comprise application functional units (24) which all belong to an application layer (34), routing functional units (26) which all belong to a routing layer (36), waveform functional units (28) which all belong to a waveform layer (38), and coverage functional units (30) which all belong to a coverage layer (40).

5. Preparation method (100) according to claim 1 to 4, wherein the layers (34, 36, 38, 40) comprise an upper layer (34) such that the resources managed by the main functional units (26) of the main layer (36) serve as support for the resources managed by the upper functional units (24) of the upper layer (34), the domains (54, 56A, 56B, 58A, 58B, 58C, 60A, 60B) comprise at least one upper domain (54) which belongs to the upper layer (34) and comprises at least one functional unit (24) which is connected *via* a vertical link (42) to a main functional unit (26) of the main domain (56A), the preparation method (100) comprising a step (180) of sharing, by the domain manager (66A) of the main domain (56A), of the updated capacity map of said main domain (56A) with the domain manager (64) of the upper domain (54).

6. Preparation method (100) according to claim 5, wherein the domains (54, 56A, 56B, 58A, 58B, 58C, 60A, 60B) comprise at least one neighbouring domain (56B) which comprises at least one functional unit (26) which is connected *via* a horizontal link (46) to a main functional unit of the main domain (56A), and the preparation method (100) comprises a step (185) of sharing, by the domain manager (66A) of the main domain (56A), of the updated capacity map of said main domain (56A) with the domain manager (66B) of the or each neighbouring domain (56B).

7. Preparation method (100) according to any one of claims 1 to 6, comprising the following additional steps:
- transmission (255), by a transmission entity, of a first forwarding service request for the forwarding of a data stream from an input functional unit (89) belonging to the main layer (36) of the communication network (10) to an output functional unit (91) belonging to said main layer (36), said first forwarding service request establishing first service level objectives, expressed in a predetermined language, for the forwarding of the data stream,
- calculation (260) of a main route (90) which connects the input functional unit (89) to the output functional unit (91) and meets the established service level objectives, said main route (90) being formed by a horizontal link (46) or a series of horizontal links (46) which connects together transit functional units (92) belonging to at least one traversed domain (93A, 93B) from among the domain(s) (56A, 56B) of the main layer (36), said calculation (260) comprising, for the or each traversed domain (93A, 93B), the following sub-steps:
∘ informing (262) the domain manager (66A, 66B) of the traversed domain (93A, 93B) that a functional unit (26) of the traversed domain (93A, 93B) has been selected as the entry point (95) of the main route (90) in said traversed domain (93A, 93B),
∘ receiving (263), by the domain manager (66A, 66B) of the traversed domain (93A, 93B), of a forwarding service request based on the first forwarding service request,
∘ identification (264, 268), by the domain manager (66A, 66B) of the traversed domain (93A, 93B), of a destination point (97) through which to send the main route (90) at its exit from the traversed domain (93A, 93B), said destination point (97) being constituted by a functional unit (26) which is connected by a horizontal link (42) to a functional unit (26) of the traversed domain (93A, 93B),
∘ determination, by the domain manager (66A, 66B) of the traversed domain (93A, 93B), of a service level promise which meets the first service level objectives for the forwarding of the data stream from the entry point (95) to the destination point (97), and
∘ calculation (274), by the domain manager (66A, 66B) of the traversed domain (93A, 93B), by means of the capacity map of the traversed domain (93A, 93B), of a section of main route which connects the entry point (95) to the destination point (97), said section being adapted to ensure the forwarding of the data stream in accordance with the service level promise and being formed by a horizontal link (46) or a series of horizontal links (46) starting from functional units (26) of the traversed domain (93A, 93B),
- allocation (320), to each transit functional unit (92), by the domain manager (66A, 66B) of the corresponding traversed domain (93A, 93B), of sufficient resources to ensure the forwarding of a data stream along the main route (90) while meeting the first service level objectives,
- commitment (330), by each transit functional unit, of the resources allocated to the functional unit, and
- informing (340) the transmission entity of the commitment of said resources.

8. Preparation method (100) according to claims 6 and 7 taken together, wherein the traversed domains (93A, 93B) are at least two in number, the step (260) of calculation of the main route (90) comprising the following additional sub-steps:
- determination (266), by the domain manager (66A) of a first traversed domain (93A) constituted by the main domain (56A), as a function of the capacity map of the or each neighbouring domain (56B), of a second traversed domain (93B), belonging to the main layer (36), through which to send the main route (90),
- selection (268), by the domain manager (66A) of the first traversed domain (93A), of the entry point (95) of the main route in the second traversed domain (93B), said entry point (95) constituting for the first traversed domain (93A) the destination point (96) of the main route (90),
- communication (270), by the domain manager (66A) of the first traversed domain (93A), of information to the domain manager (66B) of the second traversed domain (93B) relating to the selected entry point (95), and
- transmission (272) to the domain manager (66B) of the second traversed domain (93B), by the domain manager (66A) of the first traversed domain (93A), of a second forwarding service request based on the first forwarding service request, said second forwarding service request comprising second service level objectives expressed in the predetermined language.

9. Preparation method (100) according to claim 8, wherein the second service level objectives are calculated such that the combination of these second service level objectives with the service level promise of the first traversed domain (93A) meets the first service level objectives.

10. Preparation method (100) according to claim 9, wherein layer (48) of the first support domain (58A) comprises at least one domain (58B, 58C) which is distinct from the first support domain (58A), including at least one domain (58B) adjacent to the first support domain (58B) comprising at least one functional unit (28) which is connected by a horizontal link (48) to a functional unit (28) of the first support domain (58A), the second support functional unit (99B) belonging to a domain (58B) which is distinct from the first support domain (58A), and the step (282) of calculation of the support route (98) comprises the following sub-steps:
- determination (288), by the domain manager (68A) of the first support domain (58A), as a function of the capacity map of the or each adjacent domain (58B), of a second support domain (58B), chosen from among the adjacent domain(s) (58B), through which to send the support route (98),
- selection (290), by the domain manager (68A) of the first support domain (58A), of a point of entry of the support route (98) in the second support domain (58B),
- determination, by the domain manager (68A) of the first support domain (58A), of a support service level promise which meets the support service level objectives for the forwarding of the data stream from the first support functional unit (99A) to the point of entry,
- communication (292), by the domain manager (68A) of the first support domain (58A), of information to the domain manager (68B) of the second support domain (58B) relating to the selected point of entry,
- transmission (294) to the domain manager (68B) of the second support domain (58B), by the domain manager (68A) of the first support domain (58A), of a second support service request based on the first support service request, said second support service request comprising second support service level objectives expressed in the predetermined language, and
- calculation (296), by the domain manager (68A) of the first support domain (58A), by means of the capacity map of the first support domain (58A), of a support route section which connects the first support functional unit (99A) to the point of entry, said section being adapted to ensure the forwarding of the data stream in accordance with the support service level promise and being formed by a horizontal link (48) or a series of horizontal links (48) starting from functional units (28) of the first support domain (58A).

11. Preparation method (100) according to any one of claims 8 to 10, comprising the following additional steps:
- connection (190) of a first terminal (82) to the communication network (10),
- collection (230), by a service orchestrator (80), of the capacity map of the or each domain (56A) of the main layer (36) having at least one functional unit (26) which is directly reachable by the first terminal (82),
- transmission (200), by a first application running on the first terminal (82), of a data stream to a second application running on a second remote terminal (84) connected to the output functional unit (91),
- detection (210) of this transmission by the service orchestrator (80),
- activation (220), by the service orchestrator (80), of the first forwarding service request from the transmitted data stream and predetermined service logics,
- designation (240), by the service orchestrator (80), as a function of the or each collected capacity map, of an input domain (86) of the main layer (36) which is constituted by a domain having at least one functional unit (26) which is directly reachable by the first terminal (82),
- allocation (250), by the service orchestrator (80), as a function of the or each collected capacity map, to a functional unit (26) of the input domain (86) which is directly reachable by the first terminal (82), of the role of input functional unit (89), and
- transmission of the first forwarding service request to the domain manager (66A) of the input domain (86), the service orchestrator (80) constituting the transmission entity.

12. Preparation method (100) according to any one of claims 1 to 11, wherein the domain manager (64, 66A, 66B, 68A, 68B, 68C, 70A, 70B) of each domain (54, 56A, 56B, 58A, 58B, 58C, 60A, 60B) of the communication network (10) is programmed to decode service level objectives when they are expressed in the predetermined language.

13. Preparation method (100) according to anyone of claims 1 to 12, comprising a step (350) of monitoring, by each domain manager (66A, 66B) of a traversed domain (93A, 93B), of compliance with the commitment made, and in the case where the domain manager (66A, 66B) detects that the commitment can no longer be met with the current resource allocation, a step (360) of re-allocation of resources in order to maintain the commitment.

14. Preparation method (100) according to any one of claims 1 to 13, wherein the domain manager (64, 66A, 66B, 68A, 68B, 68C, 70A, 70B) of each domain (54, 56A, 56B, 58A, 58B, 58C, 60A, 60B) of the communication network (10) is a distributed manager comprising a set of coordinated automatic logic controllers distributed between different pieces of communication equipment (12A, 12B, 14, 16A, 16B, 16C, 16D, 18A, 18B, 20, 22) each including a functional unit (24, 26, 28, 30) of the domain (54, 56A, 56B, 58A, 58B, 58C, 60A, 60B).

15. Preparation method (100) according to any one of claims 1 to 15, comprising a step (140) of discovery of the domain managers (66B, 68A) of the neighbouring (56B), upper (54) and/or support (58A) domains by the domain manager (66A) of the main domain (56A) by virtue of exchanges applying the internet protocol between the functional units (26, 28) of said domains (56A, 56B, 58A) and of implicit discovery rules applied to those exchanges.
